# EUROPEAN PATENT SPECIFICATION

(11) **EP 3 487 193 B1**
(45) Date of publication and mention of the grant of the patent: **27.05.2020**
(21) Application number: 16912386.6
(22) Date of filing: 12.08.2016
(51) Int. Cl.: H04W 4/06, H04W 52/32, H04W 72/00, H04W 4/70

(54) **SERVICE TRANSMISSION METHOD AND WIRELESS COMMUNICATION DEVICE**
DIENSTÜBERTRAGUNGSVERFAHREN UND DRAHTLOSKOMMUNIKATIONSVORRICHTUNG
PROCÉDÉ DE TRANSMISSION DE SERVICE ET DISPOSITIF DE COMMUNICATION SANS FIL

(43) Date of publication of application: 22.05.2019
(73) Proprietor: Huawei Technologies Co., Ltd., Longgang District Shenzhen, Guangdong 518129 (CN)
(72) Inventor: SHAN, Baokun, Shenzhen Guangdong 518129 (CN); YU, Yinghui, Shenzhen Guangdong 518129 (CN); CHEN, Li, Shenzhen Guangdong 518129 (CN)
(74) Representative: Gill Jennings & Every LLP
(86) International application number: PCT/CN2016/094948
(87) International publication number: WO 2018/027931

(56) References cited:
- EP-A1- 3 001 703
- CN-A- 104 270 725
- CN-A- 105 451 189
- CN-A- 105 828 436
- KR-A- 20160 086 269
- US-A1- 2015 181 440
- US-A1- 2016 205 571
- US-A1- 2016 205 660

## Description

### TECHNICAL FIELD

This application relates to the field of wireless communications, and in particular, to a service transmission method and a wireless communications device.

### BACKGROUND

In the Narrowband Internet of Things (narrow band-internet of things, NB-IoT for short), usually, massive terminal devices access a same network device, and different terminal devices have different coverage levels. Based on the different coverage levels of the terminal devices, the network device needs to perform data transmission with the terminal devices in different transmission manners or by using different transmission parameters, to save radio resources as much as possible while ensuring reliability of the data transmission between the network device and the terminal devices. For example, for a terminal device having a lower coverage level, when the network device and the terminal device perform data transmission, a quantity of data repetitions may be smaller, to save radio resources. For a terminal device having a higher coverage level, when the network device and the terminal device perform data transmission, a quantity of data repetitions may be larger, to ensure reliability of data transmission.

Many services, such as a terminal device software upgrade, in the NB-IoT have a multicast characteristic. To reduce radio resource overheads of data transmission, a service having a multicast characteristic is usually transmitted between a network device and a terminal device in the NB-IoT in multicast mode by using a Long Term Evolution (Long Term Evolution, LTE for short) based Single Cell Point To Multipoint (single cell-point to multipoint, SC-PTM for short) technology. However, in the NB-IoT, because different terminal devices may have different coverage levels, when the network device transmits the service in multicast mode, to ensure that each terminal device can reliably receive the service, the network device usually needs to transmit the service in multicast mode by using a highest coverage level supported by the network device.

However, when the network device transmits a service in multicast mode, usually, not all terminal devices accessing the network device need to receive the service. If coverage levels of subscription terminals that need to receive the service are all lower than a coverage level used when the network device sends the service in multicast mode, a large quantity of radio resources are wasted.

EP 3001703 A1 discloses a method of coverage enhancement in a cellular network and involves two identifiers such as temporary mobile group identifiers being assigned to the same service with the service being transmitted repeatedly over MBMS. US 2016/205660 A1 discloses a method for transmitting paging in a wireless communication system, and in particular doing so by a mobility management entity in a wireless communication system.

### SUMMARY

This application provides a service transmission method and a wireless communications device, to reduce a waste of radio resources when a network device transmits a service in multicast mode.

According to a first aspect, this application provides a service transmission method, including: determining, by a group communication application server, a multicast coverage level of a multicast service, where the multicast coverage level is a coverage level used when a network device corresponding to the cell transmits the service in multicast mode; and sending, by the group communication application server, a multicast transmission indicator through a broadcast multicast service center BM-SC, a mobility management entity MME, and a multimedia broadcast multicast service coordination entity MCE, where the multicast coverage level indication information corresponds to the multicast coverage level.

With reference to the first aspect, in a first possible implementation of the first aspect, the determining, by a group communication application server, a multicast coverage level of a multicast service includes: obtaining, by the group communication application server, a coverage level of a subscription terminal, where the subscription terminal is a terminal device that subscribes to the multicast service; and determining, by the group communication application server, the multicast coverage level based on the coverage level of the subscription terminal.

With reference to the first possible implementation of the first aspect, in a second possible implementation of the first aspect, the obtaining, by the group communication application server, a coverage level of a subscription terminal includes: when registration information sent by the subscription terminal carries the coverage level of the subscription terminal, obtaining, by the group communication application server, the coverage level of the subscription terminal from the registration information; or determining, by the group communication application server, the coverage level of the subscription terminal based on a first transmission parameter used when the subscription terminal reports the registration information.

With reference to the second possible implementation of the first aspect, in a third possible implementation of the first aspect, the determining, by the group communication application server, the coverage level of the subscription terminal based on a first transmission parameter used when the subscription terminal reports the registration information includes: using, by the group communication application server, a coverage level corresponding to the first transmission parameter used to establish a registration information transmission connection as the coverage level of the subscription terminal, where the registration information transmission connection is a connection used to transmit the registration information.

With reference to the first possible implementation of the first aspect, in a fourth possible implementation of the first aspect, the obtaining, by the group communication application server, a coverage level of a subscription terminal includes: obtaining, by the group communication application server, a coverage level of each subscription terminal from the network device, the mobility management entity MME, or the multimedia broadcast multicast service coordination entity MCE.

With reference to the first possible implementation of the first aspect, in a fifth possible implementation of the first aspect, before the determining, by a group communication application server, a multicast coverage level of the service, the method further includes: sending, by the group communication application server, terminal device indication information to the MME or the MCE, where the terminal device indication information is used to indicate each subscription terminal. The determining, by a group communication application server, a multicast coverage level of the service includes: receiving, by the group communication application server, the multicast coverage level sent by the MME or the MCE, where the multicast coverage level is determined by the MME or the MCE based on a coverage level of the subscription terminal indicated by the terminal device indication information.

With reference to the first possible implementation of the first aspect, in a sixth possible implementation of the first aspect, the determining, by a group communication application server, a multicast coverage level of the service includes: determining, by the group communication application server, the multicast coverage level based on subscription information of the service.

With reference to the sixth possible implementation of the first aspect, in a seventh possible implementation of the first aspect, the determining, by the group communication application server, the multicast coverage level based on subscription information of the service includes: obtaining, by the group communication application server from a home subscriber server HSS, a coverage level corresponding to the subscription information of the service.

With reference to any one of the first aspect or the first to the seventh possible implementations of the first aspect, in an eighth possible implementation of the first aspect, the sending, by the group communication application server, a multicast transmission indicator to a network device of the multicast service through a BM-SC includes: obtaining, by the group communication application server, an authorized coverage level of the subscription terminal from the HSS, where the authorized coverage level of the subscription terminal is a highest coverage level that the subscription terminal is authorized to use; and if the multicast coverage level exceeds the authorized coverage level of the subscription terminal, sending, by the group communication application server, the multicast transmission indicator to the network device of the multicast service through the BM-SC.

With reference to any one of the first aspect or the first to the eighth possible implementations of the first aspect, in a ninth possible implementation of the first aspect, the multicast transmission indicator carries at least one cell list, each cell list corresponds to one service, and the cell list is used to record a multicast coverage level of a network device in each cell when the network device sends a service corresponding to the cell list.

With reference to any one of the first aspect or the first to the ninth possible implementations of the first aspect, in a tenth possible implementation of the first aspect, the multicast coverage level indication information includes a level indicator of the multicast coverage level or a second transmission parameter corresponding to the multicast coverage level.

According to a second aspect, this application further provides another service transmission method, including: determining, by a mobility management entity MME, a multicast coverage level, where the multicast coverage level is a coverage level used when a network device transmits the service in multicast mode; and sending, by the MME, a multicast transmission indicator to the multimedia broadcast multicast service coordination entity MCE, where the multicast transmission indicator carries multicast coverage level indication information, and the multicast coverage level indication information corresponds to the multicast coverage level.

With reference to the second aspect, in a first possible implementation of the second aspect, before the determining, by an MME, a multicast coverage level, the method further includes: receiving, by the MME, a multicast transmission indicator forwarded by a broadcast multicast service center BM-SC, where the multicast transmission indicator is generated by a group communication application server. The determining, by an MME, a multicast coverage level includes: obtaining, by the MME, the multicast coverage level indication information from the multicast transmission indicator.

With reference to the second aspect, in a second possible implementation of the second aspect, before the determining, by an MME, a multicast coverage level, the method further includes: receiving, by the MME, terminal device indication information sent by a group communication application server, where the terminal device indication information is used to indicate a subscription terminal. The determining, by an MME, a multicast coverage level includes: determining, by the MME based on a quantity of subscription terminals indicated by the terminal device indication information, whether the service needs to be transmitted in multicast mode in a cell to which the subscription terminals belong; and if the service needs to be transmitted in multicast mode in the cell to which the subscription terminals belong, determining, by the MME, the multicast coverage level based on a coverage level of the subscription terminal.

According to a second aspect, this application further provides another service transmission method, including: determining, by a multimedia broadcast multicast service coordination entity MCE, a multicast coverage level, where the multicast coverage level is a coverage level used when a network device corresponding to a cell to which a subscription terminal belongs transmits the service in multicast mode, and the subscription terminal is a terminal device that subscribes to the service; and sending, by the MCE, a multicast transmission indicator to the network device, where the multicast transmission indicator carries multicast coverage level indication information, and the multicast coverage level indication information corresponds to the multicast coverage level.

With reference to the third aspect, in a first possible implementation of the third aspect, before the determining, by an MCE, a multicast coverage level, the method further includes: receiving, by the MCE, a multicast transmission indicator forwarded by a mobility management entity MME. The determining, by an MCE, a multicast coverage level includes: obtaining, by the MCE, the multicast coverage level indication information from the multicast transmission indicator.

With reference to the third aspect, in a second possible implementation of the third aspect, before the determining, by an MCE, a multicast coverage level, the method further includes: receiving, by the MCE, terminal device indication information forwarded by an MME, where the terminal device indication information is used to indicate each subscription terminal. The determining, by an MCE, a multicast coverage level includes: determining, by the MCE based on a quantity of subscription terminals indicated by the terminal device indication information, whether the service needs to be transmitted in multicast mode in a cell to which the subscription terminals belong; and if the service needs to be transmitted in multicast mode in the cell to which the subscription terminals belong, determining, by the MCE, the multicast coverage level based on a coverage level of the subscription terminal.

According to a fourth aspect, this application further provides another service transmission method, including: receiving, by a network device, a multicast transmission indicator, where the multicast transmission indicator is used to instruct the network device to send a specified service in multicast mode; determining, by the network device, a service coverage level of the specified service, where the service coverage level is a coverage level used when the specified service is sent in multicast mode; and sending, by the network device, the specified service in multicast mode based on a transmission parameter corresponding to the service coverage level.

With reference to the fourth aspect, in a first possible implementation of the fourth aspect, the determining, by the network device, a service coverage level of the specified service includes: obtaining, by the network device, coverage level indication information from the multicast transmission indicator; and determining, by the network device, the service coverage level based on the coverage level indication information.

With reference to the fourth aspect, in a second possible implementation of the fourth aspect, the determining, by the network device, the service coverage level based on the coverage level indication information includes: determining, by the network device, a multicast coverage level corresponding to the coverage level indication information; and when the network device supports the multicast coverage level, using, by the network device, the multicast coverage level as the service coverage level; or when the network device does not support the multicast coverage level, selecting, by the network device, one coverage level from one or more supported coverage levels as the service coverage level, where the supported coverage level is a coverage level supported by the network device.

With reference to the second possible implementation of the fourth aspect, in a third possible implementation of the fourth aspect, the selecting, by the network device, one coverage level from one or more supported coverage levels as the service coverage level includes: when one or more supported coverage levels higher than the multicast coverage level exist, selecting, by the network device, one coverage level having a lowest level from the one or more supported coverage levels higher than the multicast coverage level as the service coverage level; or when a supported coverage level higher than the multicast coverage level does not exist, selecting, by the network device, one coverage level having a highest level from the one or more supported coverage levels as the service coverage level.

With reference to the third possible implementation of the fourth aspect, in a fourth possible implementation of the fourth aspect, the determining, by the network device, a service coverage level includes: sending, by the network device, a coverage level reporting notification to each terminal device; receiving, by the network device, a coverage level of a subscription terminal reported by the subscription terminal in response to the coverage level reporting notification, where the subscription terminal is a terminal device that subscribes to the specified service; and determining, by the network device, the service coverage level based on the coverage level of the subscription terminal.

With reference to the fourth possible implementation of the fourth aspect, in a fifth possible implementation of the fourth aspect, the sending, by the network device, a coverage level reporting notification to each terminal device includes: adding, by the network device, information about the specified service to a paging message, where the paging message is used to indicate the coverage level of the subscription terminal reported by the subscription terminal; or adding, by the network device, information about the specified service to first system information, where the first system information is used to indicate the coverage level of the subscription terminal reported by the subscription terminal, where the information about the specified service includes one of a session identifier Session ID, a temporary mobile group identity TMGI, or a group communication temporary identifier G-RNTI of the specified service.

With reference to any one of the fourth aspect or the first to the fifth implementations of the fourth aspect, in a sixth possible implementation of the fourth aspect, the sending, by the network device, the specified service in multicast mode based on a transmission parameter corresponding to the service coverage level includes: broadcasting, by the network device, multimedia broadcast multicast service control channel SC-MCCH configuration information by using system information, where the SC-MCCH configuration information is used to indicate an SC-MTCH scheduled by each multimedia broadcast multicast traffic channel SC-MCCH, and each SC-MTCH corresponds to one specified service; sending, by the network device, each piece of SC-MCCH scheduling information on a physical downlink control channel PDCCH, where a transmission parameter of the SC-MCCH scheduling information depends on the service coverage level; sending, by the network device, the SC-MCCH on a physical downlink shared channel PDSCH separately based on scheduling of each piece of SC-MCCH scheduling information, where a transmission parameter of the SC-MCCH depends on the service coverage level; sending, by the network device, corresponding SC-MTCH scheduling information on the PDCCH separately based on scheduling of each SC-MCCH, where a transmission parameter of the SC-MTCH scheduling information depends on the service coverage level; and sending, by the network device, an SC-MTCH on the PDSCH based on scheduling of the SC-MTCH scheduling information, where the SC-MTCH is used to bear a corresponding specified service, and a transmission parameter of the SC-MTCH depends on the service coverage level.

With reference to the sixth possible implementation of the fourth aspect, in a seventh possible implementation of the fourth aspect, there is one SC-MCCH, and the SC-MCCH is used to schedule all SC-MTCHs. Alternatively, there is one SC-MCCH for each coverage level, and each SC-MCCH is separately used to schedule at least one SC-MTCH. Alternatively, there is at least one SC-MCCH, and each SC-MCCH is used to schedule only one SC-MTCH.

With reference to any one of the fourth aspect or the first to the fifth possible implementations of the fourth aspect, in an eighth possible implementation of the fourth aspect, the sending, by the network device, the specified service in multicast mode based on a transmission parameter corresponding to the service coverage level includes: broadcasting, by the network device, a multimedia broadcast multicast service traffic channel scheduling message by using system information; sending, by the network device, corresponding SC-MTCH scheduling information on a PDCCH based on scheduling of the multimedia broadcast multicast service traffic channel scheduling message, where a transmission parameter of the SC-MTCH scheduling information depends on the service coverage level; and sending, by the network device, an SC-MTCH on a PDSCH based on scheduling of the SC-MTCH scheduling information, where the SC-MTCH is used to bear a corresponding specified service, and a transmission parameter of the SC-MTCH depends on the service coverage level.

According to a fifth aspect, this application further provides a wireless access method, including: receiving, by a network device, a random access request and a connection establishment request sent by a terminal device; determining, by the network device based on access channel resource information used for the random access request, a coverage level used by the terminal device, and determining an MME based on information carried in the connection establishment request, where the MME stores a context of the terminal device; sending, by the network device, a context obtaining request to the MME, where the context obtaining request is used to request the context of the terminal device; receiving, by the network device, the context of the terminal device sent by the MME, where the context of the terminal device includes a coverage level that the terminal device is authorized to use; and when the coverage level used by the terminal device exceeds the authorized coverage level of the terminal device, initiating, by the network device, connection rejection or connection release to the terminal device.

With reference to the fifth aspect, in a first possible implementation of the fifth aspect, before the network device sends a message to the MME, the method includes determining the MME to which the message is to be sent, including: obtaining, by the network device, public land mobile network PLMN information and a non-access stratum identifier NAS ID of the terminal device from the connection establishment request message; and determining, by the network device based on the PLMN information and the NAS ID of the terminal device, the MME to which the message needs to be sent.

According to a sixth aspect, this application further provides a coverage level reporting method, including: determining, by a terminal device, a coverage level or a reception parameter for downlink reception; and reporting, by the terminal device, the coverage level or the reception parameter to a network side device.

With reference to the sixth aspect, in a first possible implementation of the sixth aspect, the determining, by a terminal device, a coverage level or a reception parameter for downlink reception includes: determining, by the terminal device based on a downlink channel measurement result, a coverage level used for random access; and determining, by the terminal device, the coverage level or the reception parameter for the downlink reception based on the coverage level used for the random access.

With reference to the sixth aspect, in a second possible implementation of the sixth aspect, the determining, by a terminal device, a coverage level or a reception parameter for downlink reception includes: determining, by the terminal device, the coverage level or the reception parameter for the downlink reception based on reception of a downlink channel in connected mode.

With reference to the sixth aspect, in a third possible implementation of the sixth aspect, the reporting, by the terminal device, the coverage level or the reception parameter to a network side device includes: when subscribing to a service, reporting, by the terminal device, a coverage level of a subscription terminal of the terminal device or a downlink control channel transmission parameter corresponding to a coverage level of the subscription terminal to the group communication application server.

With reference to the third possible implementation of the sixth aspect, in a fourth possible implementation of the sixth aspect, the reporting, by the terminal device, the coverage level or the reception parameter to a network side device includes: when subscribing to a service, reporting, by the terminal device, a coverage level of a subscription terminal of the terminal device or a downlink control channel transmission parameter corresponding to a coverage level of the subscription terminal to the group communication application server.

With reference to the fourth possible implementation of the sixth aspect, in a fifth possible implementation of the sixth aspect, the reporting, by the terminal device, a coverage level of a subscription terminal of the terminal device or a downlink control channel transmission parameter corresponding to a coverage level of the subscription terminal to the group communication application server includes: sending, by the terminal device, the coverage level of the subscription terminal or the downlink control channel transmission parameter to the group communication application server by using registration information.

With reference to the sixth aspect, in a sixth possible implementation of the sixth aspect, the reporting, by the terminal device, the coverage level or the reception parameter to a network side device includes: when a coverage level reporting notification sent by a network device is received, sending the coverage level or a downlink control channel transmission parameter to the network side device.

According to a seventh aspect, this application further provides a group communication application server. The group communication application server may include units or modules configured to perform the steps of the method in the foregoing first aspect and various implementations of the first aspect.

According to an eighth aspect, this application further provides a mobility management entity. The mobility management entity may include units or modules configured to perform the steps of the method in the foregoing second aspect and various implementations of the first aspect.

According to a ninth aspect, this application further provides a multimedia broadcast multicast service coordination entity. The multimedia broadcast multicast service coordination entity may include units or modules configured to perform the steps of the method in the foregoing third aspect and various implementations of the first aspect.

According to a tenth aspect, this application further provides a network device. The network device may include units or modules configured to perform the steps of the method in the foregoing fourth aspect and various implementations of the first aspect.

According to an eleventh aspect, this application further provides a network device. The network device may include units or modules configured to perform the steps of the method in the foregoing fifth aspect and various implementations of the first aspect.

According to a twelfth aspect, this application further provides a terminal device. The terminal device may include units or modules configured to perform the steps of the method in the foregoing sixth aspect and various implementations of the first aspect.

According to the various implementations provided in the foregoing aspects of this application, a network element in a core network may determine a multicast coverage level based on a coverage level of a subscription terminal, so that a network device transmits a service in multicast mode by using a proper service coverage level, thereby reducing a waste of radio resources when the network device transmits the service in multicast mode.

### BRIEF DESCRIPTION OF DRAWINGS

To describe the technical solutions in this application more clearly, the following briefly describes the accompanying drawings required for describing the embodiments. Apparently, a person of ordinary skill in the art may still derive other drawings from these accompanying drawings without creative efforts.
FIG. 1 is a schematic structural diagram of an embodiment of a wireless transmission system according to this application;
FIG. 2 is a flowchart of an embodiment of a service transmission method according to this application;
FIG. 3 is a flowchart of another embodiment of a service transmission method according to this application;
FIG. 4 is a flowchart of another embodiment of a service transmission method according to this application;
FIG. 5 is a flowchart of an embodiment of a wireless access method according to this application;
FIG. 6 is a schematic flowchart of an embodiment of a coverage level reporting method according to this application;
FIG. 7 is a schematic structural diagram of an embodiment of a wireless communications device according to this application; and
FIG. 8 is a schematic structural diagram of another embodiment of a wireless communications device according to this application.

### DESCRIPTION OF EMBODIMENTS

In various embodiments of this application, a terminal device (terminal device) may be user equipment (user equipment, UE for short) in an LTE network or a user terminal in another network system or network protocol. A subscription terminal is a terminal device that subscribes to or needs to receive a service. A network device may be an access network device configured to perform data transmission with a terminal device in any network system or network standard. For example, the network device may be a network device (NodeB) or an evolved network device (evolved NodeB, eNB for short). The wording "plurality of' means two or more.

In various embodiments of this application, a coverage level is used to indicate a degree to which coverage is enhanced when a network device and a terminal device perform data transmission. A higher coverage level indicates that a higher coverage enhancement degree is required during data transmission. Different coverage levels correspond to different transmission parameters. The transmission parameter may be a coding scheme used for data or control information transmission, a quantity of repetitions of data or control information, or the like. To be specific, different coverage levels correspond to different coding schemes or quantities of retransmissions. For a higher coverage level, more radio resources need to be consumed when a network device and a terminal device perform data transmission, while for a lower coverage level, fewer radio resources need to be consumed when a network device and a terminal device perform data transmission. For example, if a coverage level is higher, during downlink data sending, a quantity of times of repeatedly sending a PDCCH and a PDSCH needs to be larger. If a coverage level is lower, during downlink data sending, a quantity of times of repeatedly sending a PDCCH and a PDSCH may be smaller.

The transmission parameter includes, but is not limited to, a transmission parameter actually used in physical layer channel transmission, including a quantity of repetitions of different transmission channels, an index value of a channel measurement value, a level index of a coverage level, and the like. For example, in the NB-IoT, a maximum of 8 coverage levels are supported. A network device activates a maximum of 3 coverage levels. Each coverage level corresponds to one group of transmission parameters. In the NB-IoT, a transmission parameter of a physical random access channel (Physical Random Access Channel, PRACH for short) corresponding to a coverage level may include a range of a corresponding channel measurement value or index value, a quantity of repetitions of a preamble (preamble) sequence, a cycle of the PRACH and a start position in the cycle, a quantity of and positions of PRACH subcarriers, a maximum quantity of preamble attempts, a length of a receive window of a random access response, a length of a contention resolution timer, a quantity of repetitions of a PDCCH used for scheduling a random access response and Msg3 retransmission, a search space configuration, and the like. A transmission parameter of a physical downlink control channel (physical downlink control channel, PDCCH) corresponding to a coverage level may include a cycle of the PDCCH, an offset of the PDCCH, and a start position in the cycle of the PDCCH.

That a network device sends a service in multicast mode based on a coverage level means that the network device sends the service in multicast mode, and a transmission parameter used by the network device when the network device sends the service is a transmission parameter corresponding to the coverage level.

In various embodiments of this application, a coverage level of a subscription terminal is a coverage level used by a terminal device when the terminal device performs data transmission to a network device in unicast mode. An authorized coverage level of a terminal device is a highest coverage level authorized by a network side to the terminal device to use when the terminal device performs data transmission with a network device in unicast mode. The coverage level of the subscription terminal may be any coverage level not higher than the authorized coverage level.

In various embodiments of this application, a multicast coverage level is a coverage level that a wireless communications device in a core network instructs a network device to use when the wireless communications device instructs the network device to send a service in multicast mode. Moreover, a service coverage level is a coverage level actually used by a network device when the network device sends a service in multicast mode.

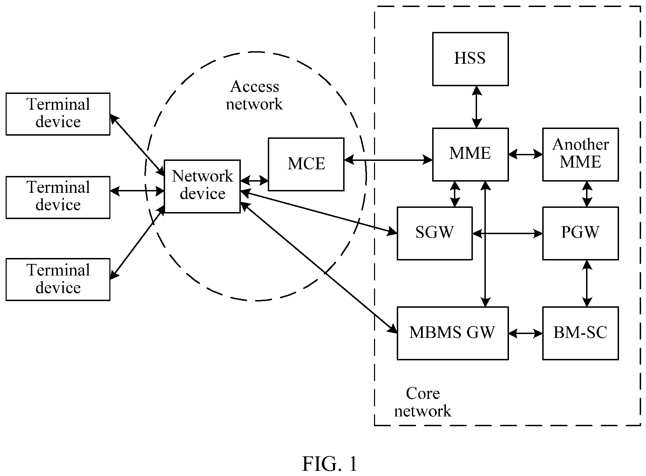

FIG. 1 is a schematic structural diagram of an embodiment of a wireless transmission system according to this application.

As shown in FIG. 1, the wireless transmission system may include a radio access network and a core network. The radio access network may include at least one cell. A same network device may simultaneously serve different cells, and a same cell may be served by different network devices.

The core network may be an evolved packet core (evolved packet core, EPC for short). The core network may include network elements such as a group communication application server (group communication service application server, GCS AS for short), a broadcast multicast service center (broadcast-multicast service center, BM-SC), a mobility management entity (mobility management entity, MME), and a home subscriber server (home subscriber server, HSS for short), as well as a public data network gateway (PDN gateway, PGW for short), a serving gateway (serving gateway, SGW for short), and a multimedia broadcast multicast service (multimedia broadcast multicast service, MBMS for short) gateway (MBMS gateway).

The GCS AS is a source of a multicast service. Main functions of the GCS AS include: being responsible for notifying a terminal device of multicast services and a time at which the multicast services are initiated; receiving registration information that needs to be sent by the terminal device to the GCS AS; and being responsible for counting a quantity of terminal devices in each cell that are interested in a multicast service, so as to determine whether to send the multicast service in unicast mode or multicast mode in a cell.

The BM-SC is responsible for managing a multimedia broadcast multicast service bearer, activating/releasing a temporary mobile group identity (Temporary Mobile Group Identity, TMGI for short) of a service, and the like.

The MME is configured to support non-access stratum (non-access stratum, NAS for short) signaling, management on security and a tracking area (tracking area, TA for short) list thereof, and the like. The MME may further be configured to store a context of each terminal device.

The radio access network may be an evolved Universal Mobile Telecommunications System terrestrial radio access network (evolved UMTS terrestrial radio access network, E-UTRAN for short), and the radio access network may include an MBMS coordination entity (MBMS coordination entity, MCE for short) and at least one network device.

The MCE is configured to determine whether to send a multicast service in multicast broadcast single frequency network (multicast-broadcast single frequency network, MBSFN for short) mode or Single Cell Point To Multipoint (single cell-point to multipoint, SC-PTM for short) mode. The MCE may be an entity independent of the network device or a part of the network device.

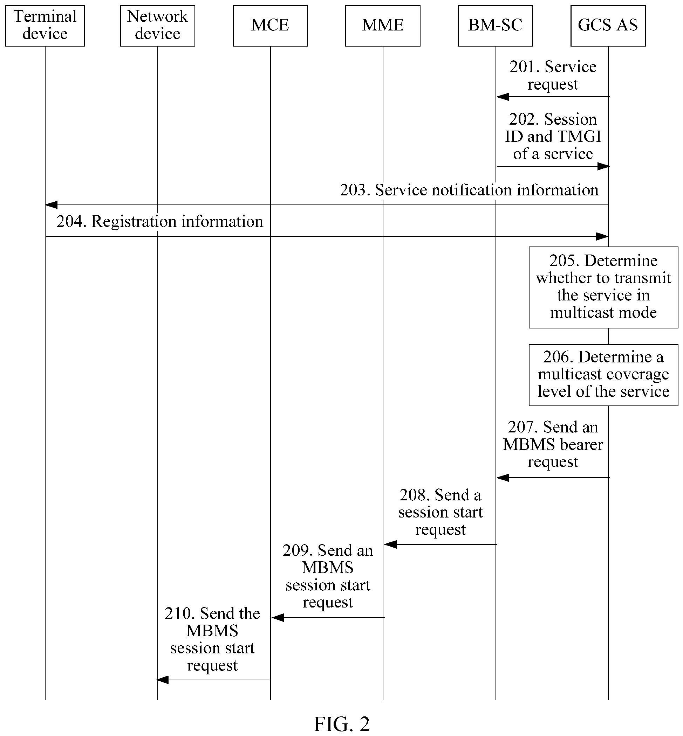

FIG. 2 is a flowchart of an embodiment of a service transmission method according to this application.

Step 201. A GCS AS sends a service initiation request to a BM-SC.

When initiating a service, the GCS AS first sends a service request to the BM-SC, to apply for a session identifier (session ID) and a TMGI of the service.

Step 202. In response to the service initiation request, the BM-SC sends a session ID and a TMGI of the service to the GCS AS.

After receiving the service initiation request, the BM-SC allocates the session ID and the TMGI to the service, and then sends information such as the session ID and the TMGI to the GCS AS.

Step 203. After receiving the session ID and the TMGI, the GCS AS sends service notification information to each terminal device in all cells served by the GCS AS.

After receiving the session ID and the TMGI, the GCS AS may send the service notification information to each terminal device in a cell. The service notification information may include the session ID, the TMGI, a start time, and the like of the service.

The service notification information may be sent in unicast mode. When there are a plurality of cells, the GCS AS may separately send the service notification information to a terminal device in each cell. For a manner of sending the service notification information, refer to related protocols or standards. A specific process is not described herein.

It should be noted that when there are a plurality of services, the GCS AS may send service notification information of each service to a terminal device in each cell in unicast mode.

Step 204. The GCS AS receives registration information sent by a subscription terminal.

After receiving the service notification information, the terminal device in each cell served by the GCS AS may determine, according to requirements, whether to receive the service corresponding to the communication message. If the terminal device needs to receive the service corresponding to the communication message, the terminal device may send the registration information to the GCS AS. The registration information may carry information such as related information of the service and related information of a cell in which the terminal device is located. For example, the registration information may include an identifier corresponding to the service and a cell identifier of the cell to which the terminal device belongs.

In addition to the related information of the service and related information of a cell to which the subscription terminal belongs, the registration information may further carry a coverage level of the subscription terminal, so that the GCS AS determines a multicast coverage level when the GCS AS needs to send the service in multicast mode.

It should be noted herein that when the subscription terminal needs to receive a plurality of services, the registration information may carry related information of each to-be-received service. The terminal device receives a plurality of pieces of service notification information within a receive time window and may notify, by using one piece of registration information, the GCS AS of a service that the terminal device needs to subscribe to, so as to save wireless communication resources.

Step 205. The GCS AS determines whether to transmit the service in multicast mode based on a quantity of subscription terminals.

After receiving registration information sent by each subscription terminal, the GCS AS may determine the quantity of subscription terminals based on the registration information, and then determine, based on the quantity of subscription terminals and cells to which the subscription terminals belong, cells in which the service needs to be transmitted in multicast mode.

When a quantity of subscription terminals that subscribe to a service in a cell is greater than a preset quantity value, or a quantity of subscription terminals exceeds a specific proportional value of a total quantity of terminal devices in the cell, the GCS AS may determine that the service needs to be transmitted in multicast mode in the cell. It should be noted herein that when there are a plurality of cells, the cells may correspond to different preset quantity values or proportional values.

When there are a plurality of services, the GCS AS needs to separately determine cells in which each service needs to be transmitted in multicast mode.

Step 206. After determining that the service needs to be transmitted in multicast mode, the GCS AS determines a multicast coverage level of the service.

After determining that the service needs to be transmitted in multicast mode, the GCS AS may determine by itself a multicast coverage level of the service in each cell.

In an implementation, after determining that a service needs to be transmitted in multicast mode in the cell, the GCS AS may first obtain a coverage level of a subscription terminal in the cell, and then determine a multicast coverage level of the service in the cell based on the coverage level of the subscription terminal in the cell.

The coverage level of the subscription terminal may be obtained in a plurality of manners.

Usually, the GCS AS may determine the coverage level of the terminal device based on coverage level reporting signaling sent by the terminal device to the GCS AS. When sending the reporting signaling, the subscription terminal needs to establish, to the network device, a transmission connection for transmitting the signaling, and the transmission connection needs to be established based on the coverage level of the subscription terminal of the terminal device. Therefore, the terminal device may send the coverage level to the GCS AS by using the coverage level reporting signaling.

To save network resources and reduce a power loss for reporting by the terminal device, the coverage level may be reported together with other uplink signaling. For example, the subscription terminal may report the coverage level to the GCS AS by adding the coverage level to the registration information of the terminal device. Similarly, the coverage level reported by the subscription terminal may be a coverage level used by the terminal device when the terminal device establishes, to the network device, a transmission connection for transmitting subscription information. In this case, when the registration information of the subscription terminal carries the coverage level of the subscription terminal, the GCS AS may obtain the coverage level of the subscription terminal from the registration information.

Because the network device has a coverage level used by the subscription terminal in connected mode, the network device may send the coverage level of the subscription terminal to the MME or the MCE for processing and storage. Based on this, the GCS AS may alternatively obtain a coverage level of each subscription terminal from the MME or the MCE.

After obtaining the coverage level of each subscription terminal, the GCS AS may determine the multicast coverage level based on the coverage level of the subscription terminal.

The multicast coverage level may also be determined based on the coverage level of the subscription terminal in a plurality of manners.

Usually, the GCS AS may select one coverage level having a highest level from coverage levels of the subscription terminals as a multicast coverage level in the cell. However, in actual use, there may be a case in which only a small quantity of subscription terminals have relatively high coverage levels, and most subscription terminals have relatively low coverage levels. To avoid a waste of radio resources, in this case, a highest level in the coverage levels of the subscription terminals may not be used as the multicast coverage level. Instead, the multicast coverage level is determined in another manner. No limitation is imposed on a specific determining manner herein.

In another implementation, the GCS AS may alternatively determine the multicast coverage level by using subscription information of the service.

For example, most terminals such as a water meter and an electric meter are located indoors, and usually, reliability of data transmission can be ensured only by requiring a relatively high coverage enhancement degree. Correspondingly, coverage levels of subscription terminals of such terminal devices are usually relatively high. Moreover, most logistic tracking terminals move outdoors, and usually, reliability of data transmission can be ensured without requiring a very high coverage enhancement degree. Correspondingly, coverage levels of subscription terminals of such terminal devices are usually relatively low. In addition, services that need to be accepted by the terminals such as the water meter and the electric meter are different from services that need to be accepted by the logistic tracking terminals. Therefore, whether a terminal device that will subscribe to the service is a water meter, an electric meter, or a logistic tracking terminal may be determined based on the subscription information of the service, so as to further determine a corresponding multicast coverage level.

Because in actual use, a service is relatively strongly correlated to a terminal device type, and the terminal device type is relatively strongly correlated to a coverage level of a subscription terminal, the GCS AS may alternatively determine the multicast coverage level based on the subscription information of the service.

In a specific implementation, a coverage level corresponding to each service during multicast transmission may be preset. When it is determined that the service needs to be transmitted in multicast mode in a cell, a coverage level corresponding to the service may be directly used as the multicast coverage level.

In addition to determining by itself the multicast coverage level of the service in each cell, the GCS AS may alternatively obtain the multicast coverage level of the service in each cell from another wireless communications device such as an MME or an MCE.

For example, if the network device sends the coverage level of the terminal device to the MME or the MCE for processing or storage, the MME or the MCE stores a coverage level of each terminal device. Therefore, alternatively, the GCS AS may send related information, such as an ID of a terminal device, of each subscription terminal in the cell to the MME or the MCE. After receiving the related information of the subscription terminal, the MME or the MCE obtains the coverage level of each subscription terminal, and then sends the coverage level of each subscription terminal to the GCS AS.

It should be noted herein that when there are a plurality of services, a multicast coverage level of each service in each cell may be determined in any one of the foregoing manners. Manners of determining the multicast coverage levels corresponding to the services may be the same or different.

After the multicast coverage level of the service is determined, the GCS AS may send a multicast transmission indicator to a network device corresponding to a cell to which the subscription terminal belongs. The multicast transmission indicator carries multicast coverage level indication information. The multicast coverage level indication information corresponds to the multicast coverage level and is used to instruct the network device to send the service in multicast mode by using a parameter corresponding to the multicast coverage level.

The multicast transmission indicator may be delivered to the network device layer by layer through wireless communications devices such as the BM-SC, the MME, and the MCE. A specific sending manner may be shown in the following steps:

Step 207. After determining the multicast coverage level of the service, the GCS AS sends an MBMS bearer request carrying the multicast coverage level indication information to the BM-SC.

After determining the multicast coverage level of the service, the GCS AS may send a multicast transmission indicator carrying the multicast coverage level indication information to the BM-SC. When there are a plurality of services or cells, the multicast transmission indicator may carry multicast coverage level indication information of each service in each cell.

A form of the multicast transmission indicator may be an MBMS bearer request. To be specific, after determining the multicast coverage level of the service, the GCS AS may send an MBMS bearer request to the BM-SC. The MBMS bearer request carries the multicast coverage level indication information.

When a service needs to be transmitted in multicast mode in a plurality of cells, the MBMS bearer request may carry a cell list. The cell list includes one or more cells in which the service needs to be transmitted in multicast mode, and multicast coverage level indication information in each of the cells. When there are a plurality of services, there may alternatively be a plurality of cell lists. Each cell list corresponds to one service. The cell list may alternatively include a service that needs to be transmitted in multicast mode in each cell and corresponding multicast coverage level indication information.

For example, when a service A needs to be transmitted in multicast mode in a second cell and a third cell, and a service B needs to be transmitted in a first cell and the second cell, the cell list may be used to indicate a multicast level of the service A in the second cell, a coverage level of the service A in the third cell, a coverage level of the service B in the first cell, and a coverage level of the service B in the third cell.

To help the network device send the service in multicast mode, the multicast coverage level indication information may be a transmission parameter corresponding to the multicast coverage level. Moreover, to reduce radio resources consumed for transmitting the multicast transmission indicator, the multicast coverage level indication information may be a level indicator of the multicast coverage level.

In addition to the coverage level indication information, the MBMS bearer request may further carry other information related to the service.

The multicast coverage level may be higher than an authorized coverage level of the subscription terminal. To avoid a conflict or indeterminacy in a service sending process caused because the multicast coverage level is higher than the authorized coverage level of the terminal device, the GCS AS may alternatively obtain the authorized coverage level of the subscription terminal from an HSS, and compare the multicast coverage level with an authorized coverage level of each subscription terminal. If the multicast coverage level exceeds the authorized coverage level of the subscription terminal, the GCS AS may still send the multicast transmission indicator to the network device corresponding to the cell to which the subscription terminal belongs. Certainly, if the multicast coverage level does not exceed the authorized coverage level of the subscription terminal, the GCS AS may still send the multicast transmission indicator to the network device corresponding to the cell to which the subscription terminal belongs.

Step 208. The BM-SC sends a session start request carrying the multicast coverage level indication information to an MME.

After receiving the multicast transmission indicator, the BM-SC may forward the multicast transmission indicator to the MME.

When a form of the multicast transmission indicator is an MBMS bearer request, after receiving the MBMS bearer request, the BM-SC may send a session start request to the MME. Moreover, the session start request also carries the multicast coverage level indication information and other information related to the service.

Step 209. The MME sends an MBMS session start request carrying the multicast coverage level indication information to an MCE.

After receiving the multicast transmission indicator, the MME may forward the multicast transmission indicator to the MCE. The multicast transmission indicator carries the multicast coverage level indication information.

For example, after receiving the session start request, the MME may send the MBMS session start request to the MCE. The MBMS session start request also carries the multicast coverage level indication information and other information related to the service.

It should be noted herein that a manner in which the MBMS session start request and the session start request carry the multicast coverage level indication information is similar to a manner in which the MBMS bearer request carries the multicast coverage level indication information and a manner in which the session start request carries the multicast coverage level indication information. Details are not described herein again.

Step 210. The MCE sends the MBMS session start request carrying the multicast coverage level indication information to a network device.

After receiving the multicast transmission indicator, the MCE determines cells in which each service needs to be separately transmitted in multicast mode and multicast coverage levels of each service in the cells, and then separately sends the multicast transmission indicator to a network device corresponding to each cell.

The multicast transmission indicator sent by the MCE to the network device corresponding to each cell is used to indicate a service that needs to be sent by the network device in multicast mode, and a multicast coverage level corresponding to the service.

For example, after receiving the MBMS session start request sent by the MME, the MCE may determine cells in which each service needs to be separately transmitted in multicast mode and multicast coverage levels of each service in the cells, and then separately send the MBMS session start request to each cell in the cell list. The MBMS session start request sent to each network device carries the multicast coverage level indication information. When there are a plurality of services, multicast coverage level indication information corresponding to all services may be carried simultaneously. After receiving the transmission indicator, the network device may transmit the service in multicast mode, and a service coverage level used when the service is transmitted depends on the multicast coverage level.

For example, after receiving the MBMS bearer request, a network device corresponding to the third cell may determine the service coverage level of the service A and the service coverage level of the service B, and then send the service A and the service B based on the service coverage levels.

In another implementation of this application, alternatively, the MME or MCE may determine whether to transmit the service in multicast mode based on a quantity of subscription terminals, and determine the multicast coverage level.

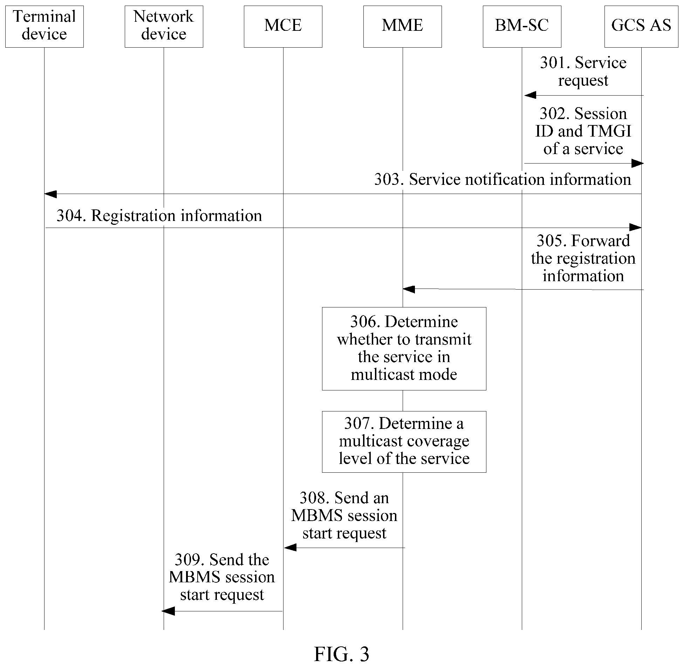

FIG. 3 is a flowchart of another embodiment of a service transmission method of according to this application.

Step 301. A GCS AS sends a service initiation request to a BM-SC.

Step 302. In response to the service initiation request, the BM-SC sends a session ID and a TMGI of the service to the GCS AS.

Step 303. After receiving the session ID and the TMGI, the GCS AS sends service notification information to each terminal device in all cells served by the GCS AS.

Step 304. The GCS AS receives registration information sent by a subscription terminal.

Step 305. The GCS AS sends the registration information to an MME.

After receiving the registration information, the GCS AS may directly send all of the registration information to the MME.

Step 306. The MME determines, based on a quantity of subscription terminals, whether to transmit the service in multicast mode.

Step 307. After determining that the service needs to be transmitted in multicast mode, the MME determines a multicast coverage level of the service.

For a specific manner in which the MME determines the multicast coverage level, refer to the manner in which the GCS AS determines the multicast coverage level. Details are not described herein again.

Step 308. The MME sends an MBMS session start request carrying the multicast coverage level indication information to an MCE.

Step 309. The MCE sends the MBMS session start request carrying the multicast coverage level indication information to a network device.

It should be noted herein that for detailed implementations of step 301 to step 304, refer to the foregoing step 201 to step 204, and for detailed implementations of step 308 and step 309, refer to the foregoing step 209 and step 210. Details are not described herein again.

In another embodiment, alternatively, after receiving the registration information, the MME may directly send the registration information to the MCE. Then, the MCE determines, based on a quantity of subscription terminals, whether the service needs to be transmitted in multicast mode. After determining that the service needs to be transmitted in multicast mode, the MCE determines the multicast coverage level of the service. For a specific manner in which the MCE determines the multicast coverage level, refer to the manner in which the GCS AS determines the multicast coverage level. Details are not described herein again.

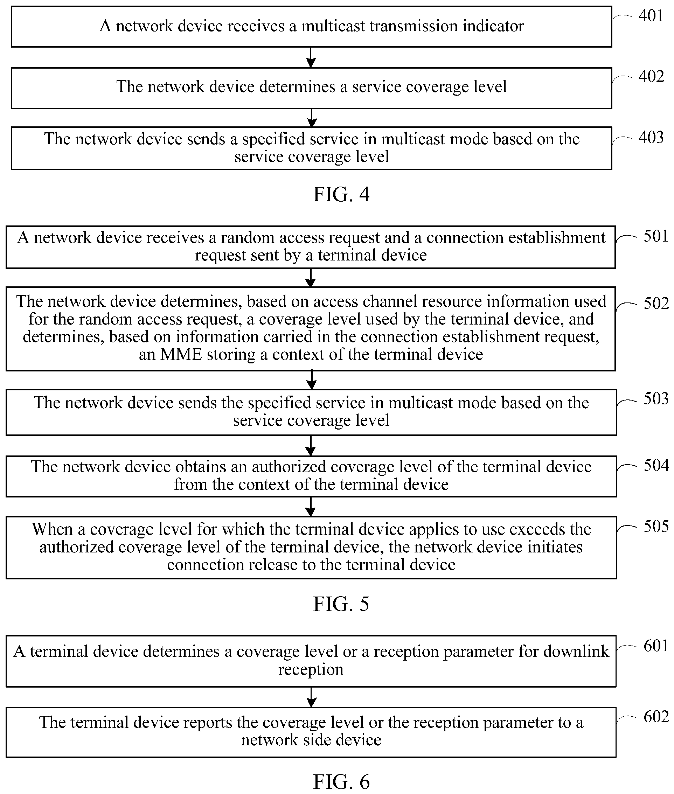

FIG. 4 is a flowchart of another embodiment of a service transmission method of according to this application. A manner in which a network device transmits the service in multicast mode may be shown in FIG. 4.

Step 401. The network device receives a multicast transmission indicator.

The multicast transmission indicator is used to instruct the network device to send a specified service in multicast mode. The multicast transmission indicator may be the multicast transmission indicator in the foregoing embodiments.

The multicast transmission indicator may carry a multicast coverage level or may not carry a multicast coverage level. For example, the multicast transmission indicator may be an MBMS session start request carrying a multicast coverage level or may be an SC-PTM indicator.

Step 402. The network device determines a service coverage level.

When the multicast transmission indicator carries a multicast coverage level, the network device may obtain the multicast coverage level from the multicast transmission indicator and determines the service coverage level based on the multicast coverage level. The service coverage level is a coverage level actually used when the specified service is sent in multicast mode.

For example, a network device corresponding to a third cell may obtain a multicast coverage level of a service A and a multicast coverage level of a service B from an MBMS session start request sent by an MCE, so as to determine a service coverage level of the service A and a service coverage level of the service B.

In actual use, there are a plurality of coverage levels in a wireless communications system, and each network device can usually support only some of the coverage levels. Therefore, after the multicast coverage level is obtained, if the network device supports the multicast coverage level, the network device may directly use the multicast coverage level as the service coverage level.

If the network device does not support the multicast coverage level, the network device may select one coverage level from one or more coverage levels supported by the network device as the service coverage level.

When one or more supported coverage levels higher than the multicast coverage level exist, one coverage level having a lowest level is selected from the one or more supported coverage levels higher than the multicast coverage level as the service coverage level. Alternatively, when a supported coverage level higher than the multicast coverage level does not exist, one coverage level having a highest level is selected from the one or more supported coverage levels as the service coverage level.

When the multicast transmission indicator does not carry a multicast coverage level, alternatively, the network device may obtain a coverage level of each subscription terminal, and then determine the service coverage level based on the coverage level of the subscription terminal.

The network device sends a coverage level reporting notification to each terminal device to require the subscription terminals to report the respective coverage levels of the subscription terminals, then receives the coverage levels of the subscription terminals reported by the subscription terminals in response to the coverage level reporting notification, and further selects, as the multicast coverage level, one coverage level having a highest level from the coverage levels of the subscription terminals reported by the subscription terminals. The coverage level reporting notification may be sent in a form of a paging message.

For example, the network device may send the paging message by using a TMGI, a session ID, or a G-RNTI of the service. The paging message may be a PDCCH scrambled by using the TMGI or the G-RNTI, or the paging message includes the TMGI, the session ID, or the G-RNTI. Before paging is sent, the network device sends system information to indicate which carriers may be used for paging and whether an anchor carrier (anchor carrier) may be used for paging. The anchor carrier is a carrier bearing a primary synchronization signal PSS, a secondary synchronization signal SSS, system information, and the like.

Alternatively, the network device may add a reporting identifier and a TMGI, a session ID, or a G-RNTI to a system message such as SIB20. Alternatively, the network device may add a TMGI, a session ID, or a G-RNTI to a MIB. After receiving the notification sent by the network device, if the terminal device needs to receive the service corresponding to the TMGI, the session ID, or the G-RNTI, the terminal device reports a coverage level of a subscription terminal of the terminal device. The coverage level of the subscription terminal may be reported in a form of predetermined information, or may be reported in a form of access channel resource information used for a random access request.

When the coverage level reporting notification is sent in a form of a paging message, all terminal devices in a cell need to read specific content of the paging message to learn that there is no TMGI corresponding the terminal devices, so as to further determine whether a coverage level of a subscription terminal of the terminal device needs to be reported. Therefore, this is very disadvantageous in terms of power consumption of the terminal device. To reduce power consumption of the terminal device, the paging message may further be optimized. For example, one bit may be added to DCI of the PDCCH, to indicate that the paging is SC-PTM paging. A bitmap may be added to another paged PDCCH, and the bitmap is used to indicate that paging messages of which TMGIs are carried in the paging message. Therefore, when determining that the paging message is a coverage level reporting notification, a terminal device different from the subscription terminal may no longer read specific content of the paging message.

Step 403. The network device sends the specified service in multicast mode based on the service coverage level.

After the service coverage level is determined, the network device may send the service in multicast mode based on the service coverage level.

The network device may broadcast MBMS control channel (MBMS control channel, SC-MCCH for short) configuration information by using system information such as SIB20. The SC-MCCH configuration information is used to indicate an MBMS traffic channel (MBMS traffic channel, SC-MTCH for short) scheduled by each SC-MCCH, and each SC-MTCH corresponds to one specified service. Usually, multicast-related system information is borne by an independent system information block, such as SIB20, to distinguish from other system information in terms of function. However, a change of a system information block, other than particularly specified system information blocks such as SIB14, triggers a change of paging notification system information or affects ValueTag of system information. When the terminal device receives a paging notification indicating a system information change or detects a change of ValueTag of a system, the terminal device reads all system information blocks (a terminal device of an NB-IoT system needs to read at least a master system information block MIB or SIB1). Therefore, due to a change of some configurations of a multicast service, the multicast-related system information is changed. When only configurations of the multicast service are changed, some terminal devices that pay no attention to the multicast service may also need to read a large amount of additional system information, resulting in an energy loss. In view of this, in this implementation, the change of the multicast-related system information neither affects ValueTag of the system information nor triggers an original change indicator in the paging message. An independent change indicator for the multicast-related system information is introduced during paging, and may be, for example, a 1-bit indicator, to indicate a change status of the multicast-related system information. For example, whether the multicast-related system information within a next system information change cycle is to be changed is indicated in all paging within a previous system information change cycle. The terminal device may determine, based on the indicator, whether the multicast-related system information needs to be updated. When the multicast-related system information needs to be updated, the multicast-related system information is then obtained.

Each SC-MTCH is used to bear one specified service. When there are a plurality of services, there are also a plurality of SC-MTCHs correspondingly. Based on different quantities of the SC-MTCHs, there may be different quantities of SC-MCCHs, and SC-MTCHs scheduled by the SC-MCCHs may be different. For example, there may be one SC-MCCH, and the SC-MCCH is used to schedule all SC-MTCHs. Alternatively, there may be at least two SC-MCCHs, and each of the SC-MCCHs is used to schedule at least one SC-MTCH. Alternatively, there is at least one SC-MCCH, and each SC-MCCH is used to schedule only one SC-MTCH.

After the system information is successfully sent, the network device may further sequentially send SC-MCCH scheduling information, an SC-MCCH, SC-MTCH scheduling information, and an SC-MTCH. The SC-MTCH is used to bear service data of a service corresponding to the SC-MTCH.

Specifically, after the SC-MCCH configuration information is successfully sent, the network device may send each piece of SC-MCCH scheduling information on the physical downlink control channel (physical downlink control channel, PDCCH for short), and then send the SC-MCCH on a physical downlink shared channel (physical downlink shared channel, PDSCH for short) separately according to scheduling of each piece of SC-MCCH scheduling information.

A transmission parameter of each piece of SC-MCCH scheduling information and a transmission parameter of each SC-MCCH both depend on a service coverage level of a service corresponding to the SC-MTCH scheduled by the SC-MCCH.

For example, when the SC-MCCH scheduling information is merely used to schedule a first SC-MTCH, and the first SC-MTCH corresponds to a first service, the transmission parameter of the SC-MCCH scheduling information and the transmission parameter of the SC-MCCH both depend on a service coverage level of the first service.

For another example, when the SC-MCCH scheduling information is used to schedule both a first SC-MTCH and a second SC-MTCH, the first SC-MTCH corresponds to a first service, and the second SC-MTCH corresponds to a second service, the transmission parameter of the SC-MCCH scheduling information and the transmission parameter of the SC-MCCH both depend on a combination of a service coverage level of the first service and a service coverage level of the second service. Usually, the transmission parameter of the SC-MCCH scheduling information and the transmission parameter of the SC-MCCH may be a transmission parameter corresponding to one coverage level having a higher level in the service coverage level of the first service and the service coverage level of the second service.

After the SC-MCCH is successfully sent, the network device may send corresponding SC-MTCH scheduling information on the PDCCH separately based on scheduling of each SC-MCCH and send a corresponding SC-MTCH on the PDSCH separately according to scheduling of each piece of SC-MTCH scheduling information. The SC-MTCH is used to bear a corresponding specified service.

A transmission parameter of each piece of SC-MTCH scheduling information and a transmission parameter of each SC-MTCH both depend on a service coverage level of a service borne by the SC-MTCH.

All of the transmission parameter of the SC-MCCH scheduling information, the transmission parameter of the SC-MCCH, the transmission parameter of the SC-MTCH scheduling information, and the transmission parameter of the SC-MTCH may be obtained by the network device from the multicast transmission indicator, or may be determined by the network device based on a level indicator obtained from the multicast transmission indicator, or may be determined based on the service coverage level after the network device determines the service coverage level.

Alternatively, the network device may broadcast the SC-MCTH scheduling information by using the system information such as SIB20. The SC-MCTH scheduling information scheduling message may be used to schedule each SC-MCTH, and each SC-MCTH corresponds to one specified service.

After the system information is successfully sent, the network device may further sequentially send the SC-MTCH scheduling information and the SC-MTCH. The SC-MTCH is used to bear service data of a service corresponding to the SC-MTCH.

Specifically, the network device may send the corresponding SC-MTCH scheduling information on the PDCCH based on scheduling of the multimedia broadcast multicast service traffic channel scheduling message, where the transmission parameter of the SC-MTCH scheduling information depends on the service coverage level, and then send the SC-MTCH on the PDSCH based on scheduling of the SC-MTCH scheduling information. The SC-MTCH is used to bear a corresponding specified service, and the transmission parameter of the SC-MTCH depends on the service coverage level.

FIG. 5 is a flowchart of an embodiment of a wireless access method according to this application.

Step 501. A network device receives a random access request and a connection establishment request sent by a terminal device.

The terminal device may select a PRACH resource based on a value of reference signal received power (reference signal receiving power, RSRP) that is measured in idle mode, and send random access on the selected PRACH resource. The PRACH may reflect a coverage level for which the terminal device applies to use.

After receiving the random access request, the network device may send a random access response message to the terminal device. The random access response message may be used to indicate a temporary C-RNTI allocated to the terminal device and an uplink transmission resource that is used when the terminal device sends the connection establishment request (msg3) such as an RRC establishment request or an RRC re-establishment request.

The terminal device may initiate the connection establishment request such as the RRC connection request or the RRC re-establishment request based on information indicated by the random access response message. The connection establishment request may carry a non-access stratum identifier (non-access stratum ID, NAS ID for short) of the terminal device, and help the network device route public land mobile network (public land mobile network, PLMN for short) information of an MME. For example, the NAS ID of the terminal device may include an S-TMSI, a P-TMSI, and the like. The PLMN information may include a PLMN index, a selected PLMN, a PLMN ID, and the like.

Step 502. The network device determines, based on access channel resource information used for the random access request, a coverage level used by the terminal device, and determines, based on information carried in the connection establishment request, an MME storing a context of the terminal device.

After receiving the random access request, the network device may determine, based on the PRACH resource occupied by the random access request, the coverage level used by the terminal device.

After the connection establishment request is received, the MME configured to store the context of the terminal device and routing information of the MME may be determined based on the NAS ID of the terminal device and the PLMN information.

Step 503. The network device sends a context obtaining request to the MME, where the context obtaining request is used to request the context of the terminal device.

The network device may send, based on the obtained routing information of the MME, terminal device context request information to the MME storing the context of the terminal device. The message may be an initial terminal device message (Initial UE message), or another piece of routing information that first arrives at the MME. The message is used to obtain the context of the terminal device that is stored in the MME.

After receiving the context obtaining request information sent by the network device, the MME feeds back the context of the terminal device to the network device. Information about the context includes subscription information of the terminal device. The subscription information includes, but is not limited to, authorized use information of the coverage level, priority information of the terminal device, and the like. Alternatively, priority information of the terminal device is not included in the subscription information. The context may further include capability information and security information of the terminal device, or negation information between another MME and the network device.

Step 504. The network device obtains an authorized coverage level of the terminal device from the context of the terminal device.

After obtaining the context, the network device may determine the authorized coverage level of the terminal device based on the authorized use information of the coverage level.

Step 505. When a coverage level for which the terminal device applies to use exceeds the authorized coverage level of the terminal device, the network device initiates connection release to the terminal device.

After obtaining the authorized coverage level of the terminal device, the network device may compare the coverage level for which the terminal device applies to use and the authorized coverage level of the terminal device. When the coverage level for which the terminal device applies to use exceeds the authorized coverage level of the terminal device, the network device initiates connection release to the terminal device. When the coverage level for which the terminal device applies to use does not exceed the authorized coverage level of the terminal device, the network device may establish a connection to the terminal device based on msg3.

FIG. 6 is a schematic flowchart of an embodiment of a coverage level reporting method according to this application. The method in this embodiment may be performed by a terminal device.

Step 601. The terminal device determines a coverage level or a reception parameter for downlink reception.

The coverage level or the reception parameter for the downlink reception is a coverage level or a reception parameter when the terminal device receives downlink data. The coverage level corresponds to the reception parameter.

The terminal device determines the coverage level or the reception parameter for the downlink reception in a plurality of manners. If no downlink channel in connected mode exists between the terminal device and a network device, the terminal device may determine, based on a downlink channel measurement result, a coverage level used for random access, and then determine the coverage level or the reception parameter for the downlink reception based on the coverage level used for the random access. If a downlink channel in connected mode exists between the terminal device and a network device, the terminal device may determine the coverage level or the reception parameter for the downlink reception based on reception of the downlink channel in connected mode.

Step 602. The terminal device reports the coverage level or the reception parameter to a network side device.

After the coverage level or the reception parameter for the downlink reception is determined, the terminal device may transmit the coverage level or the reception parameter to the network side device.

The network side device may include any one of a network device, an MME, an MCE, or a GCS AS.

When the network side device is a GCS AS, when receiving service notification information sent by the GCS AS and determining that a service indicated by the service notification information needs to be subscribed to, the terminal device may report a coverage level of a subscription terminal of the terminal device or a downlink control channel transmission parameter corresponding to a coverage level of a subscription terminal to the GCS AS. The terminal device may report the coverage level of the subscription terminal or the downlink control channel transmission parameter to the GCS AS by using an independent message, or add the coverage level of the subscription terminal or the downlink control channel transmission parameter to registration information. To be specific, the terminal device may send the coverage level of the subscription terminal or the downlink control channel transmission parameter to the GCS AS by using information.

When the network side device is a network device, an MME, or an MCE, when receiving a coverage level reporting notification sent by the network device, the terminal device may send the coverage level or a downlink control channel transmission parameter to the network side device.

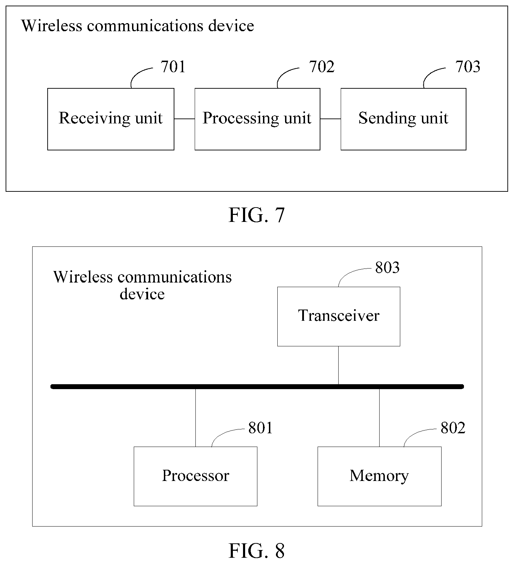

FIG. 7 is a schematic structural diagram of an embodiment of a wireless communications device in a wireless communications system according to this application. The wireless communications device may be implemented as any wireless communications device in the radio access network and the core network shown in FIG. 1. For example, the network may be the group communication application server, a broadcast multicast service center, a mobility management entity, a multimedia broadcast multicast service coordination entity, a network device, user equipment, or the like.

The wireless communications device may include a receiving unit 701, a processing unit 702, and a sending unit 703.

When the wireless communications device is a group communication application server, the processing unit 702 is configured to determine a multicast coverage level of a multicast service, where the multicast coverage level is a coverage level used when a network device corresponding to the cell transmits the service in multicast mode. The sending unit 703 is configured to send a multicast transmission indicator through a broadcast multicast service center BM-SC, a mobility management entity MME, and a multimedia broadcast multicast service coordination entity MCE, where the multicast coverage level indication information corresponds to the multicast coverage level.

Optionally, the processing unit 702 is further configured to: obtain a coverage level of a subscription terminal, where the subscription terminal is a terminal device that subscribes to the multicast service; and determine the multicast coverage level based on the coverage level of the subscription terminal.

Optionally, the processing unit 702 is further configured to: when registration information sent by the subscription terminal carries the coverage level of the subscription terminal, obtain the coverage level of the subscription terminal from the registration information; or determine the coverage level of the subscription terminal based on a first transmission parameter used when the subscription terminal reports the registration information.

Optionally, the processing unit 702 is further configured to: when registration information sent by the subscription terminal carries the coverage level of the subscription terminal, obtain the coverage level of the subscription terminal from the registration information; or determine the coverage level of the subscription terminal based on a first transmission parameter used when the subscription terminal reports the registration information.

Optionally, the processing unit 702 is further configured to use a coverage level corresponding to the first transmission parameter used to establish a registration information transmission connection as the coverage level of the subscription terminal. The registration information transmission connection is a connection used to transmit the registration information.

Optionally, the receiving unit 701 is configured to obtain a coverage level of each subscription terminal from the network device, the mobility management entity MME or the multimedia broadcast multicast service coordination entity MCE.

Optionally, the sending unit 703 is configured to send terminal device indication information to the MME or the MCE, where the terminal device indication information is used to indicate each subscription terminal. The receiving unit 701 is configured to receive the multicast coverage level sent by the MME or the MCE. The multicast coverage level is determined by the MME or the MCE based on a coverage level of the subscription terminal indicated by the terminal device indication information.

Optionally, the receiving unit 701 is configured to obtain the multicast coverage level corresponding to subscription information of the service.

Optionally, the receiving unit 701 is further configured to obtain, from a home subscriber server HSS, a coverage level corresponding to the subscription information of the service.

Optionally, the receiving unit 701 is configured to obtain an authorized coverage level of the subscription terminal from the HSS. The authorized coverage level of the subscription terminal is a highest coverage level that the subscription terminal is authorized to use. The sending unit 703 is configured to: if the multicast coverage level exceeds the authorized coverage level of the subscription terminal, send the multicast transmission indicator to the network device of the multicast service through the BM-SC.

Optionally, the multicast transmission indicator carries at least one cell list, each cell list corresponds to one service, and the cell list is used to record a multicast coverage level of a network device in each cell when the network device sends a service corresponding to the cell list.

Optionally, the multicast coverage level indication information includes a level indicator of the multicast coverage level or a second transmission parameter corresponding to the multicast coverage level.

When the wireless communications device is a mobility management entity, the processing unit 702 is configured to determine a multicast coverage level. The multicast coverage level is a coverage level used when a network device transmits the service in multicast mode. The sending unit 703 is configured to send a multicast transmission indicator to the multimedia broadcast multicast service coordination entity MCE. The multicast transmission indicator carries multicast coverage level indication information, and the multicast coverage level indication information corresponds to the multicast coverage level.

Optionally, the receiving unit 701 is configured to receive a multicast transmission indicator forwarded by a broadcast multicast service center BM-SC. The multicast transmission indicator is generated by a group communication application server. The processing unit 702 is further configured to obtain the multicast coverage level indication information from the multicast transmission indicator.

Optionally, the receiving unit 701 is configured to receive terminal device indication information sent by a group communication application server. The terminal device indication information is used to indicate a subscription terminal. The processing unit 702 is further configured to: determine, based on a quantity of subscription terminals indicated by the terminal device indication information, whether the service needs to be transmitted in multicast mode in a cell to which the subscription terminals belong; and if the service needs to be transmitted in multicast mode in the cell to which the subscription terminals belong, determine the multicast coverage level based on a coverage level of the subscription terminal.

When the wireless communications device is a multimedia broadcast multicast service coordination entity, the processing unit 702 is configured to determine a multicast coverage level. The multicast coverage level is a coverage level used when a network device corresponding to a cell to which a subscription terminal belongs transmits the service in multicast mode, and the subscription terminal is a terminal device that subscribes to the service. The sending unit 703 is configured to send a multicast transmission indicator to the network device. The multicast transmission indicator carries multicast coverage level indication information, and the multicast coverage level indication information corresponds to the multicast coverage level.

Optionally, the receiving unit 701 is configured to receive a multicast transmission indicator forwarded by a mobility management entity MME. The processing unit 702 is configured to obtain the multicast coverage level indication information from the multicast transmission indicator.

Optionally, the receiving unit 701 is configured to receive terminal device indication information forwarded by an MME. The terminal device indication information is used to indicate each subscription terminal. The processing unit 702 is configured to: determine, based on a quantity of subscription terminals indicated by the terminal device indication information, whether the service needs to be transmitted in multicast mode in a cell to which the subscription terminals belong; and if the service needs to be transmitted in multicast mode in the cell to which the subscription terminals belong, determine the multicast coverage level based on a coverage level of the subscription terminal.

When the wireless communications device is a network device, the receiving unit 701 is configured to receive a multicast transmission indicator. The multicast transmission indicator is used to instruct the network device to send a specified service in multicast mode. The processing unit 702 is configured to determine a service coverage level of the specified service. The service coverage level is a coverage level used when the specified service is sent in multicast mode. The sending unit 703 is configured to send the specified service in multicast mode based on a transmission parameter corresponding to the service coverage level.

Optionally, the processing unit 702 is further configured to: obtain coverage level indication information from the multicast transmission indicator; and determine the service coverage level based on the coverage level indication information.

Optionally, the processing unit 702 is further configured to: determine a multicast coverage level corresponding to the coverage level indication information; and when the network device supports the multicast coverage level, use the multicast coverage level as the service coverage level; or when the network device does not support the multicast coverage level, select one coverage level from one or more supported coverage levels as the service coverage level, where the supported coverage level is a coverage level supported by the network device.

Optionally, the processing unit 702 is further configured to: when one or more supported coverage levels higher than the multicast coverage level exist, select one coverage level having a lowest level from the one or more supported coverage levels higher than the multicast coverage level as the service coverage level; or when a supported coverage level higher than the multicast coverage level does not exist, select one coverage level having a highest level from the one or more supported coverage levels as the service coverage level.

Optionally, the sending unit 703 is further configured to send a coverage level reporting notification to each terminal device. The receiving unit 701 is further configured to receive a coverage level of a subscription terminal reported by the subscription terminal in response to the coverage level reporting notification. The subscription terminal is a terminal device that subscribes to the specified service. The processing unit 702 is further configured to determine the service coverage level based on the coverage level of the subscription terminal.

Optionally, the sending unit 703 is further configured to add information about the specified service to a paging message, where the paging message is used to indicate the coverage level of the subscription terminal reported by the subscription terminal; or add information about the specified service to first system information. The first system information is used to indicate the coverage level of the subscription terminal reported by the subscription terminal. The information about the specified service includes one of a session identifier Session ID, a temporary mobile group identity TMGI, or a group communication temporary identifier G-RNTI of the specified service.

Optionally, the sending unit 703 is further configured to: broadcast multimedia broadcast multicast service control channel SC-MCCH configuration information by using system information, where the SC-MCCH configuration information is used to indicate an SC-MTCH scheduled by each multimedia broadcast multicast traffic channel SC-MCCH, and each SC-MTCH corresponds to one specified service; send each piece of SC-MCCH scheduling information on a physical downlink control channel PDCCH, where a transmission parameter of the SC-MCCH scheduling information depends on the service coverage level; send the SC-MCCH on a physical downlink shared channel PDSCH separately based on scheduling of each piece of SC-MCCH scheduling information, where a transmission parameter of the SC-MCCH depends on the service coverage level; send corresponding SC-MTCH scheduling information on the PDCCH separately based on scheduling of each SC-MCCH, where a transmission parameter of the SC-MTCH scheduling information depends on the service coverage level; and send an SC-MTCH on the PDSCH based on scheduling of the SC-MTCH scheduling information, where the SC-MTCH is used to bear a corresponding specified service, and a transmission parameter of the SC-MTCH depends on the service coverage level.

Optionally, there is one SC-MCCH, and the SC-MCCH is used to schedule all SC-MTCHs. Alternatively, there is one SC-MCCH for each coverage level, and each SC-MCCH is separately used to schedule at least one SC-MTCH. Alternatively, there is at least one SC-MCCH, and each SC-MCCH is used to schedule only one SC-MTCH.

Optionally, the sending unit 703 is configured to: broadcast a multimedia broadcast multicast service traffic channel scheduling message by using system information; send corresponding SC-MTCH scheduling information on a PDCCH based on scheduling of the multimedia broadcast multicast service traffic channel scheduling message, where a transmission parameter of the SC-MTCH scheduling information depends on the service coverage level; and send an SC-MTCH on a PDSCH based on scheduling of the SC-MTCH scheduling information, where the SC-MTCH is used to bear a corresponding specified service, and a transmission parameter of the SC-MTCH depends on the service coverage level.

When the wireless communications device is a network device, the receiving unit 701 is configured to receive a random access request and a connection establishment request sent by a terminal device. The processing unit 702 is configured to determine, based on access channel resource information used for the random access request, a coverage level used by the terminal device, and determine an MME based on information carried in the connection establishment request. The MME stores a context of the terminal device. The sending unit 703 is configured to send a context obtaining request to the MME, where the context obtaining request is used to request the context of the terminal device. The receiving unit 701 is further configured to receive the context of the terminal device sent by the MME. The context of the terminal device includes a coverage level that the terminal device is authorized to use. The processing unit 702 is further configured to: when the coverage level used by the terminal device exceeds the authorized coverage level of the terminal device, initiate connection rejection or connection release to the terminal device.

Optionally, the processing unit 702 is further configured to: obtain public land mobile network PLMN information and a non-access stratum identifier NAS ID of the terminal device from the connection establishment request; and determine, based on the PLMN information and the NAS ID of the terminal device, the MME to which the message needs to be sent.

When the wireless communications device is a terminal device, the processing unit 702 is configured to determine a coverage level or a reception parameter for downlink reception. The sending unit 703 is configured to report the coverage level or the reception parameter to a network side device.

Optionally, the processing unit 702 is further configured to: determine, based on a downlink channel measurement result, a coverage level used for random access; and determine the coverage level or the reception parameter for the downlink reception based on the coverage level used for the random access.

Optionally, the processing unit 702 is further configured to determine the coverage level or the reception parameter for the downlink reception based on reception of a downlink channel in connected mode.

Optionally, the sending unit 703 is further configured to: when the terminal device subscribes to a service, report a coverage level of a subscription terminal of the terminal device or a downlink control channel transmission parameter corresponding to a coverage level of the subscription terminal to the group communication application server.

Optionally, the sending unit 703 is further configured to send the coverage level of the subscription terminal or the downlink control channel transmission parameter to the group communication application server by using registration information.

Optionally, the sending unit 703 is further configured to: when a coverage level reporting notification sent by a network device is received, send the coverage level or a downlink control channel transmission parameter to the network side device.

As shown in FIG. 8, the wireless communications device may include a processor 801, a memory 802, and a transceiver 803. The processor, the memory, and the transceiver may be connected to each other through one or more buses. A function to be implemented by the receiving unit 701 may be implemented by the transceiver 803 of the wireless communications device or by the processor 801 controlling the transceiver 803. A function to be implemented by the sending unit 703 may also be implemented by the transceiver 803 of the wireless communications device or by the processor 801 controlling the transceiver 803. A function to be implemented by the processing unit 702 may be implemented by the processor 801.

The processor 801 is a control center of the wireless communications device, is connected to various parts of the entire wireless communications device by using various interfaces and lines, and implements various functions of the wireless communications device and/or processes data by running or executing a software program and/or module stored in the memory 802 and invoking data stored in the memory. The processor may include an integrated circuit (Integrated Circuit, IC for short), for example, may include a single packaged IC, or may include a plurality of connected packaged ICs that have same or different functions. For example, the processor may merely include a central processing unit (central processing unit, CPU for short) or a combination of a GPU, a digital signal processor (digital signal processor, DSP for short), and a control chip (for example, a baseband chip) in the transceiver. In an implementation of the present invention, the CPU may be a single computing core or may include a plurality of computing cores.

The transceiver 803 is configured to establish a communications channel, so that the wireless communications device is connected to a receiving device through the communications channel, thereby implementing data transmission between the wireless communications devices. The transceiver may include communications modules such as a wireless local area network (wireless local area network, WLAN for short) module, a Bluetooth module, and a baseband (base band) module, and a radio frequency (radio frequency, RF for short) circuit corresponding to the communications modules, and is configured to perform wireless local area network communication, Bluetooth communication, infrared communication, and/or cellular communications system communication, such as Wideband Code Division Multiple Access (wideband code division multiple access, WCDMA for short) and/or High Speed Downlink Packet Access (high speed downlink packet access, HSDPA for short). The transceiver is configured to control communication between the components in the wireless communications device and can support direct memory access (direct memory access).

In different implementations of the present invention, various transceivers in the transceiver 803 usually appear in a form of an integrated circuit chip (integrated circuit chip) and may be selectively combined, but does not need to include all transceivers and corresponding antenna groups. For example, the transceiver 803 may include only a baseband chip, a radio frequency chip, and corresponding antennas, to provide a communication function in a cellular communications system. The wireless communications device may be connected to a cellular network (cellular network) or the Internet (internet) through a wireless communication connection established by the transceiver, such as wireless local area network access or WCDMA access. In some optional implementations of the present invention, a communications module, for example, the baseband module, in the transceiver may be integrated into the processor, typically, for example, APQ+MDM series platforms provided by the Qualcomm (Qualcomm) Incorporated. The radio frequency circuit is configured to receive and send a signal during an information receiving and sending process or during a call. For example, after downlink information of a network device is received, the downlink information is processed by the processor. In addition, designed uplink data is sent to the network device. Usually, the radio frequency circuit includes a known circuit for performing these functions, which includes but is not limited to an antenna system, a radio frequency transceiver, one or more amplifiers, a tuner, one or more oscillators, a digital signal processor, a codec (Codec) chip set, a subscriber identity module (SIM) card, a memory, and the like. In addition, the radio frequency circuit may further communicate with a network and another device through wireless communication. The wireless communication may use any communication standard or protocol, including, but not limited to, Global System for Mobile Communications (global system of mobile communication, GSM for short), General Packet Radio Service (general packet radio service, GPRS for short), Code Division Multiple Access (code division multiple access, CDMA for short), Wideband Code Division Multiple Access (wideband code division multiple access, WCDMA for short), High Speed Uplink Packet Access (high speed uplink packet access, HSUPA for short), Long Term Evolution (long term evolution, LTE for short), e-mail, Short Messaging Service (short messaging service, SMS for short), and the like.

In specific implementation, the present invention further provides a computer storage medium. The computer storage medium may store a program. When executed, the program may include some or all of the steps in the embodiments of the calling method provided in the present invention. The storage medium may be a magnetic disk, an optical disc, a read-only memory (English: read-only memory, ROM for short), a random access memory (English: random access memory, RAM for short), or the like.

A person skilled in the art may clearly understand that, the technologies in the embodiments of the present invention may be implemented by software in addition to a necessary general hardware platform. Based on such an understanding, the technical solutions in the embodiments of the present invention essentially, or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, or a network device) to perform the methods described in the embodiments or some parts of the embodiments of the present invention.

For same or similar parts in the embodiments in this specification, refer to these embodiments. Especially, the wireless communications device embodiments are basically similar to the method embodiments, and therefore are described briefly. For related parts, refer to descriptions in the method embodiments.

The foregoing described implementations of the present invention do not limit the protection scope of the present invention.

## Claims

1. A service transmission method, comprising:
determining (205), by a group communication application server, based on a quantity of subscription terminals and cells to which the subscription terminals belong, the cells in which a service needs to be transmitted in multicast mode;
obtaining, by the group communication application server, the coverage level of each subscription terminal;
determining (206), by the group communication application server, a multicast coverage level of the multicast service in each cell based on the coverage level of the subscription terminals, wherein the multicast coverage level is a coverage level used when a network access device corresponding to the cell transmits the service in multicast mode; and
sending (207), by the group communication application server, a multicast transmission indicator to a network access device of the multicast service through a broadcast multicast service center, BM-SC, a mobility management entity, MME, and a multimedia broadcast multicast service coordination entity, MCE, wherein the multicast transmission indicator carries multicast coverage level indication information, and the multicast coverage level indication information corresponds to the multicast coverage level.

2. The method according to claim 1, wherein the determining, by a group communication application server, a multicast coverage level of a multicast service comprises:
obtaining, by the group communication application server, a coverage level of a subscription terminal, wherein the subscription terminal is a terminal device that subscribes to the multicast service; and
determining, by the group communication application server, the multicast coverage level based on the coverage level of the subscription terminal.

3. The method according to claim 2, wherein the obtaining, by the group communication application server, a coverage level of a subscription terminal comprises:
when registration information sent by the subscription terminal carries the coverage level of the subscription terminal, obtaining, by the group communication application server, the coverage level of the subscription terminal from the registration information; or
determining, by the group communication application server, the coverage level of the subscription terminal based on a first transmission parameter used when the subscription terminal reports the registration information.

4. The method according to claim 1, wherein the determining, by a group communication application server, a multicast coverage level of the service comprises:
determining, by the group communication application server, the multicast coverage level based on subscription information of the service.

5. A service transmission method, comprising:
receiving (401), by an access network device, a multicast transmission indicator, wherein the multicast transmission indicator is used to instruct the network device to send a specified service in multicast mode;
wherein the multicast transmission indicator may or may not carry a multicast coverage level;
determining (402), by the access network device, a service coverage level of the specified service, wherein the service coverage level is a coverage level used when the specified service is sent in multicast mode;
wherein if the multicast transmission indicator carries the multicast coverage level and the access network device supports the multicast coverage level, using the multicast coverage level as the service coverage level;
wherein if the multicast transmission indicator carries the multicast coverage level and the access network device does not support the multicast coverage level, selecting, by access network device, one coverage level from one or more coverage levels supported by the access network device as the service coverage level;
wherein if the multicast transmission indicator does not carry the multicast coverage level, obtaining, by the access network device, from each subscription terminal, a coverage level of the subscription terminal, and determining the service coverage level based on the coverage level of the subscription terminals; and
sending (403), by the access network device, the specified service in multicast mode based on a transmission parameter corresponding to the service coverage level.

6. The method according to claim 5, wherein the determining, by the network device, the service coverage level based on the coverage level indication information comprises:
determining, by the network device, a multicast coverage level corresponding to the coverage level indication information; and
when the network device supports the multicast coverage level, using, by the network device, the multicast coverage level as the service coverage level; or
when the network device does not support the multicast coverage level, selecting, by the network device, one coverage level from one or more supported coverage levels as the service coverage level, wherein the supported coverage level is a coverage level supported by the network device.

7. The method according to claim 6, wherein the selecting, by the network device, one coverage level from one or more supported coverage levels as the service coverage level comprises:
when one or more supported coverage levels higher than the multicast coverage level exist, selecting, by the network device, one coverage level having a lowest level from the one or more supported coverage levels higher than the multicast coverage level as the service coverage level; or
when a supported coverage level higher than the multicast coverage level does not exist, selecting, by the network device, one coverage level having a highest level from the one or more supported coverage levels as the service coverage level.

8. The method according to claim 7, wherein the determining, by the network device, a service coverage level comprises:
sending, by the network device, a coverage level reporting notification to each terminal device;
receiving, by the network device, a coverage level of a subscription terminal reported by the subscription terminal in response to the coverage level reporting notification, wherein the subscription terminal is a terminal device that subscribes to the specified service; and
determining, by the network device, the service coverage level based on the coverage level of the subscription terminal.

9. A group communication application server, comprising:
a processing unit (702), configured to determine, by a group communication application server, based on a quantity of subscription terminals and cells to which the subscription terminals belong, the cells in which a service needs to be transmitted in multicast mode;
obtain, by the group communication application server, the coverage level of each subscription terminal;
determine a multicast coverage level of the multicast service in each cell based on the coverage level of the subscription terminals, wherein the multicast coverage level is a coverage level used when a network access device corresponding to a cell transmits the service in multicast mode; and
a sending unit (703), configured to send a multicast transmission indicator to a network access device of the multicast service through a broadcast multicast service center, BM-SC, a mobility management entity, MME, and a multimedia broadcast multicast service coordination entity, MCE, wherein the multicast coverage level indication information corresponds to the multicast coverage level determined by the processing unit.

10. The group communication application server according to claim 9, wherein
the processing unit is further configured to: obtain a coverage level of a subscription terminal, wherein the subscription terminal is a terminal device that subscribes to the multicast service; and determine the multicast coverage level based on the coverage level of the subscription terminal.

11. The group communication application server according to claim 10, wherein
the processing unit is further configured to: when registration information sent by the subscription terminal carries the coverage level of the subscription terminal, obtain the coverage level of the subscription terminal from the registration information; or determine the coverage level of the subscription terminal based on a first transmission parameter used when the subscription terminal reports the registration information.

12. A network device, comprising:
a receiving unit (701), configured to receive a multicast transmission indicator, wherein the multicast transmission indicator is used to instruct the network device to send a specified service in multicast mode;
wherein the multicast transmission indicator may or may not carry a multicast coverage level;
a processing unit (702), configured to determine a service coverage level of the specified service, wherein the service coverage level is a coverage level used when the specified service is sent in multicast mode, and
wherein if the multicast transmission indicator carries the multicast coverage level and the access network device supports the multicast coverage level, use the multicast coverage level as the service coverage level;
wherein if the multicast transmission indicator carries the multicast coverage level and the access network device does not support the multicast coverage level, select, by access network device, one coverage level from one or more coverage levels supported by the access network device as the service coverage level;
wherein if the multicast transmission indicator does not carry the multicast coverage level, obtaining, by the access network device, from each subscription terminal, a coverage level of the subscription terminal, and determine the service coverage level based on the coverage level of the subscription terminals; and
a sending unit (703), configured to send the specified service in multicast mode based on a transmission parameter corresponding to the service coverage level.

13. The network device according to claim 12, wherein
the processing unit is further configured to: determine a multicast coverage level corresponding to the coverage level indication information; and when the network device supports the multicast coverage level, use the multicast coverage level as the service coverage level; or when the network device does not support the multicast coverage level, select one coverage level from one or more supported coverage levels as the service coverage level, wherein the supported coverage level is a coverage level supported by the network device.

14. The network device according to claim 12, wherein
the sending unit is further configured to send a coverage level reporting notification to each terminal device;
the receiving unit is further configured to receive a coverage level of a subscription terminal reported by the subscription terminal in response to the coverage level reporting notification, wherein the subscription terminal is a terminal device that subscribes to the specified service; and
the processing unit is further configured to determine the service coverage level based on the coverage level of the subscription terminal.

## Patentansprüche

1. Dienstübertragungsverfahren, umfassend:
Bestimmen (205), durch einen Gruppenkommunikationsanwendungsserver, basierend auf einer Menge an Teilnehmerendgeräten und Zellen, zu denen die Teilnehmerendgeräte gehören, der Zellen, in denen ein Dienst im Multicast-Modus übertragen werden muss;
Erhalten, durch den Gruppenkommunikationsanwendungsserver, des Abdeckungsniveaus jedes Teilnehmerendgeräts;
Bestimmen (206), durch den Gruppenkommunikationsanwendungsserver, eines Multicast-Abdeckungsniveaus des Multicast-Dienstes in jeder Zelle basierend auf dem Abdeckungsniveau der Teilnehmerendgeräte, wobei das Multicast-Abdeckungsniveau ein Abdeckungsniveau ist, das verwendet wird, wenn eine Netzwerkzugangsvorrichtung entsprechend der Zelle den Dienst im Multicast-Modus überträgt; und
Senden (207), durch den Gruppenkommunikationsanwendungsserver, eines Multicast-Übertragungsindikators an eine Netzwerkzugangsvorrichtung des Multicast-Dienstes durch ein Multicast-Übertragungsdienst-Center, BM-SC, eine Mobilitätsverwaltungseinheit, MME, und eine Multimedia-Übertragungs-Multicast-Dienst-Koordinationseinheit, MCE, wobei der Multicast-Übertragungsindikator Multicast-Abdeckungsniveauangabeinformationen trägt und die Multicast-Abdeckungsniveauangabeinformationen dem Multicast-Abdeckungsniveau entsprechen.

2. Verfahren nach Anspruch 1, wobei das Bestimmen, durch einen Gruppenkommunikationsanwendungsserver, eines Multicast-Abdeckungsniveaus eines Multicast-Dienstes Folgendes umfasst:
Erhalten, durch den Gruppenkommunikationsanwendungsserver, eines Abdeckungsniveaus eines Teilnehmerendgeräts, wobei das Teilnehmerendgerät eine Endgerätevorrichtung ist, die an dem Multicast-Dienst teilnimmt; und
Bestimmen, durch den Gruppenkommunikationsanwendungsserver, des Multicast-Abdeckungsniveaus basierend auf dem Abdeckungsniveau des Teilnehmerendgeräts.

3. Verfahren nach Anspruch 2, wobei das Erhalten, durch den Gruppenkommunikationsanwendungsserver, eines Abdeckungsniveaus eines Teilnehmerendgeräts Folgendes umfasst:
wenn Registrierungsinformationen, die durch das Teilnehmerendgerät gesendet werden, das Abdeckungsniveau des Teilnehmerendgeräts tragen, Erhalten, durch den Gruppenkommunikationsanwendungsserver, des Abdeckungsniveaus des Teilnehmerendgeräts von den Registrierungsinformationen; oder
Bestimmen, durch den Gruppenkommunikationsanwendungsserver, des Abdeckungsniveaus des Teilnehmerendgeräts basierend auf einem ersten Übertragungsparameter, der verwendet wird, wenn das Teilnehmerendgerät die Registrierungsinformationen meldet.

4. Verfahren nach Anspruch 1, wobei das Bestimmen, durch einen Gruppenkommunikationsanwendungsserver, eines Multicast-Abdeckungsniveaus des Dienstes Folgendes umfasst:
Bestimmen, durch den Gruppenkommunikationsanwendungsserver, des Multicast-Abdeckungsniveaus basierend auf Teilnehmerinformationen des Dienstes.

5. Dienstübertragungsverfahren, umfassend:
Empfangen (401), durch eine Zugangsnetzwerkvorrichtung, eines Multicast-Übertragungsindikators, wobei der Multicast-Übertragungsindikator verwendet wird, um die Netzwerkvorrichtung anzuweisen, einen spezifizierten Dienst im Multicast-Modus zu senden;
wobei der Multicast-Übertragungsindikator ein Multicast-Abdeckungsniveau tragen kann oder nicht;
Bestimmen (402), durch die Zugangsnetzwerkvorrichtung, eines Dienstabdeckungsniveaus des spezifizierten Dienstes, wobei das Dienstabdeckungsniveau ein Abdeckungsniveau ist, das verwendet wird, wenn der spezifizierte Dienst im Multicast-Modus gesendet wird;
wobei, wenn der Multicast-Übertragungsindikator das Multicast-Abdeckungsniveau trägt und die Zugangsnetzwerkvorrichtung das Multicast-Abdeckungsniveau unterstützt, das Multicast-Abdeckungsniveau als das Dienstabdeckungsniveau verwendet wird;
wobei, wenn der Multicast-Übertragungsindikator das Multicast-Abdeckungsniveau trägt und die Zugangsnetzwerkvorrichtung das Multicast-Abdeckungsniveau nicht unterstützt, durch die Zugangsnetzwerkvorrichtung ein Abdeckungsniveau aus einem oder mehreren Abdeckungsniveaus, das durch die Zugangsnetzwerkvorrichtung unterstützt wird, als das Dienstabdeckungsniveau ausgewählt wird;
wobei, wenn der Multicast-Übertragungsindikator das Multicast-Abdeckungsniveau nicht trägt, durch die Zugangsnetzwerkvorrichtung von jedem Teilnehmerendgerät ein Abdeckungsniveau des Teilnehmerendgeräts erhalten wird und das Dienstabdeckungsniveau basierend auf dem Abdeckungsniveau der Teilnehmerendgeräte bestimmt wird; und
Senden (403), durch die Zugangsnetzwerkvorrichtung, des spezifizierten Dienstes im Multicast-Modus basierend auf einem Übertragungsparameter entsprechend dem Dienstabdeckungsniveau.

6. Verfahren nach Anspruch 5, wobei das Bestimmen, durch die Netzwerkvorrichtung, des Dienstabdeckungsniveaus basierend auf den Abdeckungsniveauangabeinformationen Folgendes umfasst:
Bestimmen, durch die Netzwerkvorrichtung, eines Multicast-Abdeckungsniveaus entsprechend den Abdeckungsniveauangabeinformationen; und
wenn die Netzwerkvorrichtung das Multicast-Abdeckungsniveau unterstützt, Verwenden, durch die Netzwerkvorrichtung, des Multicast-Abdeckungsniveaus als das Dienstabdeckungsniveau; oder
wenn die Netzwerkvorrichtung das Multicast-Abdeckungsniveau nicht unterstützt, Auswählen, durch die Netzwerkvorrichtung, eines Abdeckungsniveaus aus einem oder mehreren unterstützten Abdeckungsniveaus als das Dienstabdeckungsniveau, wobei das unterstützte Abdeckungsniveau ein Abdeckungsniveau ist, das durch die Netzwerkvorrichtung unterstützt wird.

7. Verfahren nach Anspruch 6, wobei das Auswählen, durch die Netzwerkvorrichtung, eines Abdeckungsniveaus aus einem oder mehreren unterstützten Abdeckungsniveaus als das Dienstabdeckungsniveau Folgendes umfasst:
wenn ein oder mehrere unterstützte Abdeckungsniveaus vorhanden sind, die höher als das Multicast-Abdeckungsniveau sind, Auswählen, durch die Netzwerkvorrichtung, eines Abdeckungsniveaus, das ein niedrigstes Niveau aufweist, aus dem einen oder den mehreren unterstützten Abdeckungsniveaus, die höher als das Multicast-Abdeckungsniveau sind, als das Dienstabdeckungsniveau; oder
wenn kein unterstütztes Abdeckungsniveau vorhanden ist, das höher als das Multicast-Abdeckungsniveau ist, Auswählen, durch die Netzwerkvorrichtung, eines Abdeckungsniveaus, das ein höchstes Niveau aufweist, aus dem einen oder den mehreren unterstützten Abdeckungsniveaus als das Dienstabdeckungsniveau.

8. Verfahren nach Anspruch 7, wobei das Bestimmen, durch die Netzwerkvorrichtung, eines Dienstabdeckungsniveaus Folgendes umfasst:
Senden, durch die Netzwerkvorrichtung, einer Abdeckungsniveaumeldebenachrichtigung an jede Endgerätevorrichtung;
Empfangen, durch die Netzwerkvorrichtung, eines Abdeckungsniveaus eines Teilnehmerendgeräts, das durch das Teilnehmerendgerät gemeldet wird, als Reaktion auf die Abdeckungsniveaumeldebenachrichtigung, wobei das Teilnehmerendgerät eine Endgerätevorrichtung ist, die an dem spezifizierten Dienst teilnimmt; und
Bestimmen, durch die Netzwerkvorrichtung, des Dienstabdeckungsniveaus basierend auf dem Abdeckungsniveau des Teilnehmerendgeräts.

9. Gruppenkommunikationsanwendungsserver, umfassend:
eine Verarbeitungseinheit (702), die konfiguriert ist, um durch einen Gruppenkommunikationsanwendungsserver basierend auf einer Menge an Teilnehmerendgeräten und Zellen, zu denen die Teilnehmerendgeräte gehören, die Zellen zu bestimmen, in denen ein Dienst im Multicast-Modus übertragen werden muss;
Erhalten, durch den Gruppenkommunikationsanwendungsserver, des Abdeckungsniveaus jedes Teilnehmerendgeräts;
Bestimmen eines Multicast-Abdeckungsniveaus des Multicast-Dienstes in jeder Zelle basierend auf dem Abdeckungsniveau der Teilnehmerendgeräte, wobei das Multicast-Abdeckungsniveau ein Abdeckungsniveau ist, das verwendet wird, wenn eine Netzwerkzugangsvorrichtung entsprechend einer Zelle den Dienst im Multicast-Modus überträgt; und
eine Sendeeinheit (703), die konfiguriert ist, um einen Multicast-Übertragungsindikator an eine Netzwerkzugangsvorrichtung des Multicast-Dienstes durch ein Multicast-Übertragungsdienst-Center, BM-SC, eine Mobilitätsverwaltungseinheit, MME, und eine Multimedia-Übertragungs-Multicast-Dienst-Koordinationseinheit, MCE, zu senden, wobei die Multicast-Abdeckungsniveauangabeinformationen dem durch die Verarbeitungseinheit bestimmten Multicast-Abdeckungsniveau entsprechen.

10. Gruppenkommunikationsanwendungsserver nach Anspruch 9, wobei
die Verarbeitungseinheit ferner für Folgendes konfiguriert ist: Erhalten eines Abdeckungsniveaus eines Teilnehmerendgeräts, wobei das Teilnehmerendgerät eine Endgerätevorrichtung ist, die an dem Multicast-Dienst teilnimmt; und Bestimmen des Multicast-Abdeckungsniveaus basierend auf dem Abdeckungsniveau des Teilnehmerendgeräts.

11. Gruppenkommunikationsanwendungsserver nach Anspruch 10, wobei
die Verarbeitungseinheit ferner für Folgendes konfiguriert ist: wenn Registrierungsinformationen, die durch das Teilnehmerendgerät gesendet werden, das Abdeckungsniveau des Teilnehmerendgeräts tragen, Erhalten des Abdeckungsniveaus des Teilnehmerendgeräts von den Registrierungsinformationen; oder Bestimmen des Abdeckungsniveaus des Teilnehmerendgeräts basierend auf einem ersten Übertragungsparameter, der verwendet wird, wenn das Teilnehmerendgerät die Registrierungsinformationen meldet.

12. Netzwerkvorrichtung, umfassend:
eine Empfangseinheit (701), die konfiguriert ist, um einen Multicast-Übertragungsindikator zu empfangen, wobei der Multicast-Übertragungsindikator verwendet wird, um die Netzwerkvorrichtung anzuweisen, einen spezifizierten Dienst im Multicast-Modus zu senden;
wobei der Multicast-Übertragungsindikator ein Multicast-Abdeckungsniveau tragen kann oder nicht;
eine Verarbeitungseinheit (702), die konfiguriert ist, um ein Dienstabdeckungsniveau des spezifizierten Dienstes zu bestimmen, wobei das Dienstabdeckungsniveau ein Abdeckungsniveau ist, das verwendet wird, wenn der spezifizierte Dienst im Multicast-Modus gesendet wird, und
wobei, wenn der Multicast-Übertragungsindikator das Multicast-Abdeckungsniveau trägt und die Zugangsnetzwerkvorrichtung das Multicast-Abdeckungsniveau unterstützt, das Multicast-Abdeckungsniveau als das Dienstabdeckungsniveau verwendet wird;
wobei, wenn der Multicast-Übertragungsindikator das Multicast-Abdeckungsniveau trägt und die Zugangsnetzwerkvorrichtung das Multicast-Abdeckungsniveau nicht unterstützt, durch die Zugangsnetzwerkvorrichtung ein Abdeckungsniveau aus einem oder mehreren Abdeckungsniveaus, das durch die Zugangsnetzwerkvorrichtung unterstützt wird, als das Dienstabdeckungsniveau ausgewählt wird;
wobei, wenn der Multicast-Übertragungsindikator das Multicast-Abdeckungsniveau nicht trägt, durch die Zugangsnetzwerkvorrichtung von jedem Teilnehmerendgerät ein Abdeckungsniveau des Teilnehmerendgeräts erhalten wird und das Dienstabdeckungsniveau basierend auf dem Abdeckungsniveau der Teilnehmerendgeräte bestimmt wird; und
eine Sendeeinheit (703), die konfiguriert ist, um den spezifizierten Dienst im Multicast-Modus basierend auf einem Übertragungsparameter entsprechend dem Dienstabdeckungsniveau zu senden.

13. Netzwerkvorrichtung nach Anspruch 12, wobei die Verarbeitungseinheit ferner für Folgendes konfiguriert ist:
Bestimmen eines Multicast-Abdeckungsniveaus entsprechend den Abdeckungsniveauangabeinformationen; und wenn die Netzwerkvorrichtung das Multicast-Abdeckungsniveau unterstützt, Verwenden des Multicast-Abdeckungsniveaus als das Dienstabdeckungsniveau; oder wenn die Netzwerkvorrichtung das Multicast-Abdeckungsniveau nicht unterstützt, Auswählen eines Abdeckungsniveaus aus einem oder mehreren unterstützten Abdeckungsniveaus als das Dienstabdeckungsniveau, wobei das unterstützte Abdeckungsniveau ein Abdeckungsniveau ist, das durch die Netzwerkvorrichtung unterstützt wird.

14. Netzwerkvorrichtung nach Anspruch 12, wobei
die Sendeeinheit ferner konfiguriert ist, um eine Abdeckungsniveaumeldebenachrichtigung an jede Endgerätevorrichtung zu senden;
die Empfangseinheit ferner konfiguriert ist, um ein Abdeckungsniveau eines Teilnehmerendgeräts, das durch das Teilnehmerendgerät gemeldet wird, als Reaktion auf die Abdeckungsniveaumeldebenachrichtigung zu empfangen, wobei das Teilnehmerendgerät eine Endgerätevorrichtung ist, die an dem spezifizierten Dienst teilnimmt; und
die Verarbeitungseinheit ferner konfiguriert ist, um das Dienstabdeckungsniveau basierend auf dem Abdeckungsniveau des Teilnehmerendgeräts zu bestimmen.

## Revendications

1. Procédé de transmission de service comprenant :
la détermination (205), par un serveur d'application de communication de groupe, sur la base d'une quantité de terminaux d'abonnement et de cellules auxquelles les terminaux d'abonnement appartiennent, des cellules dans lesquelles un service doit être transmis en mode de multidiffusion ;
l'obtention, par le serveur d'application de communication de groupe, du niveau de couverture de chaque terminal d'abonnement ; la détermination (206), par le serveur d'application de communication de groupe, d'un niveau de couverture de multidiffusion du service de multidiffusion dans chaque cellule sur la base du niveau de couverture des terminaux d'abonnement, dans lequel le niveau de couverture de multidiffusion est un niveau de couverture utilisé quand un dispositif d'accès au réseau correspondant à la cellule transmet le service en mode de multidiffusion ; et
l'envoi (207), par le serveur d'application de communication de groupe, d'un indicateur de transmission de multidiffusion à un dispositif d'accès au réseau du service de multidiffusion à travers un centre de services de diffusion/multidiffusion, BM-SC, une entité de gestion de mobilité, MME, et une entité de coordination de service de diffusion/multidiffusion multimédia, MCE, dans lequel l'indicateur de transmission de multidiffusion transporte des informations d'indication de niveau de couverture de multidiffusion et les informations d'indication de niveau de couverture de multidiffusion correspondent au niveau de couverture de multidiffusion.

2. Procédé selon la revendication 1, dans lequel la détermination, par un serveur d'application de communication de groupe, d'un niveau de couverture de multidiffusion d'un service de multidiffusion comprend :
l'obtention, par le serveur d'application de communication de groupe, d'un niveau de couverture d'un terminal d'abonnement, dans lequel le terminal d'abonnement est un dispositif terminal qui s'abonne au service de multidiffusion ; et
la détermination, par le serveur d'application de communication de groupe, du niveau de couverture de multidiffusion sur la base du niveau de couverture du terminal d'abonnement.

3. Procédé selon la revendication 2, dans lequel l'obtention, par le serveur d'application de communication de groupe, d'un niveau de couverture d'un terminal d'abonnement comprend :
quand des informations d'enregistrement envoyées par le terminal d'abonnement transportent le niveau de couverture du terminal d'abonnement, l'obtention, par le serveur d'application de communication de groupe, du niveau de couverture du terminal d'abonnement à partir des informations d'enregistrement ; ou
la détermination, par le serveur d'application de communication de groupe, du niveau de couverture du terminal d'abonnement sur la base d'un premier paramètre de transmission utilisé quand le terminal d'abonnement rapporte les informations d'enregistrement.

4. Procédé selon la revendication 1, dans lequel la détermination, par un serveur d'application de communication de groupe, d'un niveau de couverture de multidiffusion du service comprend :
la détermination, par le serveur d'application de communication de groupe, du niveau de couverture de multidiffusion sur la base d'informations d'abonnement du service.

5. Procédé de transmission de service comprenant :
la réception (401), par un dispositif de réseau d'accès, d'un indicateur de transmission de multidiffusion, dans lequel l'indicateur de transmission de multidiffusion est utilisé pour donner instruction au dispositif de réseau d'envoyer un service spécifié en mode de multidiffusion ;
dans lequel l'indicateur de transmission de multidiffusion peut ou peut ne pas transporter un niveau de couverture de multidiffusion ;
la détermination (402), par le dispositif de réseau d'accès, d'un niveau de couverture de service du service spécifié, dans lequel le niveau de couverture de service est un niveau de couverture utilisé quand le service spécifié est envoyé en mode de multidiffusion ;
dans lequel, si l'indicateur de transmission de multidiffusion transporte le niveau de couverture de multidiffusion et le dispositif de réseau d'accès prend en charge le niveau de couverture de multidiffusion, l'utilisation du niveau de couverture de multidiffusion comme le niveau de couverture de service ;
dans lequel, si l'indicateur de transmission de multidiffusion transporte le niveau de couverture de multidiffusion et le dispositif de réseau d'accès ne prend pas en charge le niveau de couverture de multidiffusion, la sélection, par le dispositif de réseau d'accès, d'un niveau de couverture parmi un ou plusieurs niveaux de couverture pris en charge par le dispositif de réseau d'accès comme le niveau de couverture de service ;
dans lequel, si l'indicateur de transmission de multidiffusion ne transporte pas le niveau de couverture de multidiffusion, l'obtention, par le dispositif de réseau d'accès, à partir de chaque terminal d'abonnement, d'un niveau de couverture du terminal d'abonnement, et la détermination du niveau de couverture de service sur la base du niveau de couverture du terminal d'abonnement ; et
l'envoi (403), par le dispositif de réseau d'accès, du service spécifié en mode de multidiffusion sur la base d'un paramètre de transmission correspondant au niveau de couverture de service.

6. Procédé selon la revendication 5, dans lequel la détermination, par le dispositif de réseau, du niveau de couverture de service sur la base des informations d'indication de niveau de couverture comprend :
la détermination, par le dispositif de réseau, d'un niveau de couverture de multidiffusion correspondant aux informations d'indication de niveau de couverture ; et
quand le dispositif de réseau prend en charge le niveau de couverture de multidiffusion, l'utilisation, par le dispositif de réseau, du niveau de couverture de multidiffusion comme le niveau de couverture de service ; ou
quand le dispositif de réseau ne prend pas en charge le niveau de couverture de multidiffusion, la sélection, par le dispositif de réseau, d'un niveau de couverture parmi un ou plusieurs niveaux de couverture pris en charge comme le niveau de couverture de service, dans lequel le niveau de couverture pris en charge est un niveau de couverture pris en charge par le dispositif de réseau.

7. Procédé selon la revendication 6, dans lequel la sélection, par le dispositif de réseau, d'un niveau de couverture parmi un ou plusieurs niveaux de couverture pris en charge comme le niveau de couverture de service comprend :
quand un ou plusieurs niveaux de couverture pris en charge supérieurs au niveau de couverture de multidiffusion existent, la sélection, par le dispositif de réseau, d'un niveau de couverture ayant un plus bas niveau parmi les un ou plusieurs niveaux de couverture pris en charge supérieurs au niveau de couverture de multidiffusion comme le niveau de couverture de service ; ou
quand un niveau de couverture pris en charge supérieur au niveau de couverture de multidiffusion n'existe pas, la sélection, par le dispositif de réseau, d'un niveau de couverture ayant un plus haut niveau parmi les un ou plusieurs niveaux de couverture pris en charge comme le niveau de couverture de service.

8. Procédé selon la revendication 7, dans lequel la détermination, par le dispositif de réseau, d'un niveau de couverture de service comprend :
l'envoi, par le dispositif de réseau, d'une notification de rapport de niveau de couverture à chaque dispositif terminal ; la réception, par le dispositif de réseau, d'un niveau de couverture d'un terminal d'abonnement rapporté par le terminal d'abonnement en réponse à la notification de rapport de niveau de couverture, dans lequel le terminal d'abonnement est un dispositif terminal qui s'abonne au service spécifié ; et
la détermination, par le dispositif de réseau, du niveau de couverture de service sur la base du niveau de couverture du terminal d'abonnement.

9. Serveur d'application de communication de groupe comprenant :
une unité de traitement (702), configurée pour déterminer, par un serveur d'application de communication de groupe, sur la base d'une quantité de terminaux d'abonnement et de cellules auxquelles les terminaux d'abonnement appartiennent, des cellules dans lesquelles un service doit être transmis en mode de multidiffusion ;
obtenir, par le serveur d'application de communication de groupe, le niveau de couverture de chaque terminal d'abonnement ;
déterminer un niveau de couverture de multidiffusion du service de multidiffusion dans chaque cellule sur la base du niveau de couverture des terminaux d'abonnement, dans lequel le niveau de couverture de multidiffusion est un niveau de couverture utilisé quand un dispositif d'accès au réseau correspondant à une cellule transmet le service en mode de multidiffusion ; et
une unité d'envoi (703), configurée pour envoyer un indicateur de transmission de multidiffusion à un dispositif d'accès au réseau du service de multidiffusion à travers un centre de services de diffusion/multidiffusion, BM-SC, une entité de gestion de mobilité, MME, et une entité de coordination de service de diffusion/multidiffusion multimédia, MCE, dans lequel les informations d'indication de niveau couverture de multidiffusion correspondent au niveau de couverture de multidiffusion déterminé par l'unité de traitement.

10. Serveur d'application de communication de groupe selon la revendication 9, dans lequel
l'unité de traitement est configurée en outre pour : obtenir un niveau de couverture d'un terminal d'abonnement, dans lequel le terminal d'abonnement est un dispositif terminal qui s'abonne au service de multidiffusion ; et déterminer le niveau de couverture de multidiffusion sur la base du niveau de couverture du terminal d'abonnement.

11. Serveur d'application de communication de groupe selon la revendication 10, dans lequel
l'unité de traitement est configurée en outre pour : quand des informations d'enregistrement envoyées par le terminal d'abonnement transportent le niveau de couverture du terminal d'abonnement, obtenir le niveau de couverture du terminal d'abonnement à partir des informations d'enregistrement ; ou déterminer le niveau de couverture du terminal d'abonnement sur la base d'un premier paramètre de transmission utilisé quand le terminal d'abonnement rapporte les informations d'enregistrement.

12. Dispositif de réseau comprenant :
une unité de réception (701) configurée pour recevoir un indicateur de transmission de multidiffusion, dans lequel l'indicateur de transmission de multidiffusion est utilisé pour donner instruction au dispositif de réseau d'envoyer un service spécifié en mode de multidiffusion ;
dans lequel l'indicateur de transmission de multidiffusion peut ou peut ne pas transporter un niveau de couverture de multidiffusion ;
une unité de traitement (702) configurée pour déterminer un niveau de couverture de service du service spécifié, dans lequel le niveau de couverture de service est un niveau de couverture utilisé quand le service spécifié est envoyé en mode de multidiffusion, et
dans lequel, si l'indicateur de transmission de multidiffusion transporte le niveau de couverture de multidiffusion et le dispositif de réseau d'accès prend en charge le niveau de couverture de multidiffusion, utiliser le niveau de couverture de multidiffusion comme le niveau de couverture de service ;
dans lequel, si l'indicateur de transmission de multidiffusion transporte le niveau de couverture de multidiffusion et le dispositif de réseau d'accès ne prend pas en charge le niveau de couverture de multidiffusion, sélectionner, par le dispositif de réseau d'accès, un niveau de couverture parmi un ou plusieurs niveaux de couverture pris en charge par le dispositif de réseau d'accès comme le niveau de couverture de service ;
dans lequel, si l'indicateur de transmission de multidiffusion ne transporte pas le niveau de couverture de multidiffusion, obtenir, par le dispositif de réseau d'accès, à partir de chaque terminal d'abonnement, un niveau de couverture du terminal d'abonnement, et déterminer le niveau de couverture de service sur la base du niveau de couverture du terminal d'abonnement ; et
une unité d'envoi (703) configurée pour envoyer le service spécifié en mode de multidiffusion sur la base d'un paramètre de transmission correspondant au niveau de couverture de service.

13. Dispositif de réseau selon la revendication 12, dans lequel l'unité de traitement est configurée en outre pour : déterminer un niveau de couverture de multidiffusion correspondant aux informations d'indication de niveau de couverture ; et, quand le dispositif de réseau prend en charge le niveau de couverture de multidiffusion, utiliser le niveau de couverture de multidiffusion comme le niveau de couverture de service ; ou, quand le dispositif de réseau ne prend pas en charge le niveau de couverture de multidiffusion, sélectionner un niveau de couverture parmi un ou plusieurs niveaux de couverture pris en charge comme le niveau de couverture de service, dans lequel le niveau de couverture pris en charge est un niveau de couverture pris en charge par le dispositif de réseau.

14. Dispositif de réseau selon la revendication 12, dans lequel l'unité d'envoi est configurée en outre pour envoyer une notification de rapport de niveau de couverture à chaque dispositif terminal ;
l'unité de réception est configurée en outre pour recevoir un niveau de couverture d'un terminal d'abonnement rapporté par le terminal d'abonnement en réponse à la notification de rapport de niveau de couverture, dans lequel le terminal d'abonnement est un dispositif terminal qui s'abonne au service spécifié ; et
l'unité de traitement est configurée en outre pour déterminer le niveau de couverture de service sur la base du niveau de couverture du terminal d'abonnement.
